# EUROPEAN PATENT APPLICATION

(11) **EP 4 811 849 A1**
(43) Date of publication of application: **23.09.2026**
(21) Application number: 23958531.8
(22) Date of filing: 14.11.2023
(51) Int. Cl.: H04W 16/28

(54) **BEAM INDICATION METHOD, DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2023/131649
(87) International publication number: WO 2025/102249

(57) **Abstract**

Embodiments of the present invention relate to a beam indication method, a device, and a storage medium. The method comprises: receiving first information sent by a first network device, wherein the first information is used for triggering a terminal device to execute handover to a target cell, and the first network device is a network device corresponding to a current serving cell of the terminal device; determining a first transmission configuration indication (TCI) state on the basis of the first information, wherein the first TCI state indicates a first beam, and the first beam is abeam used in the process of the terminal device executing the handover to the target cell, and determining a second TCI state, wherein the second TCI state indicates a second beam, the second beam is a beam used by the terminal device after handover to the target cell, and the second TCI state is the same as or different from the first TCI state. In this way, the terminal device can determine the second beam used after handover to the target cell, so that the terminal device hands over to the target cell and communicates by means of the target cell, thereby improving the handover success rate and the communication efficiency.

## Description

### TECHNICAL FIELD

The disclosure relates to the field of wireless communication technologies, and in particular to a method for beam indication, a device, and a storage medium.

### BACKGROUND

In a wireless communication system, in order to reduce handover latency and decrease signaling overhead, a 3rd generation partnership project (3GPP) introduces layer 1 (L1) or layer 2 (L2) triggered mobility (LTM). Based on the LTM, a network device may configure a plurality of candidate cells (or candidate cell groups) for a terminal, and control the terminal to perform handover via a L1 signaling or a L2 signaling.

### SUMMARY

Embodiments of the disclosure provide a method for beam indication, a device, and a storage medium.

According to a first aspect of embodiments of the disclosure, a method for beam indication is provided. The method includes: receiving first information sent by a first network device, in which the first information is used for triggering a terminal to perform handover to a target cell, and the first network device is a network device corresponding to a current serving cell of the terminal; determining, based on the first information, a first transmission configuration indication (TCI) state, in which the first TCI state indicates a first beam, and the first beam is a beam used by the terminal during a process of performing handover to the target cell; and determining a second TCI state, in which the second TCI state indicates a second beam, the second beam is a beam used by the terminal after handover to the target cell, and the second TCI state is the same as or different from the first TCI state.

According to a second aspect of embodiments of the disclosure, a method for beam indication is provided. The method includes: sending first information to a terminal, in which the first information is used for triggering the terminal to perform handover to a target cell, and the first network device is a network device corresponding to a current serving cell of the terminal.

According to a third aspect of embodiments of the disclosure, a method for beam indication is provided. The method includes: sending fourth information to a terminal, in which the fourth information is used to determine that the terminal successfully hands over to a target cell, and the second network device is a network device corresponding to the target cell.

According to a fourth aspect of embodiments of the disclosure, a terminal is provided. The terminal includes: a transceiver module, configured to receive first information sent by a first network device, in which the first information is used for triggering the terminal to perform handover to a target cell, and the first network device is a network device corresponding to a current serving cell of the terminal; and a processing module, configured to determine, based on the first information, a first TCI state, in which the first TCI state indicates a first beam, and the first beam is a beam used by the terminal during a process of performing handover to the target cell; and determine a second TCI state, in which the second TCI state indicates a second beam, the second beam is a beam used by the terminal after handover to the target cell, and the second TCI state is the same as or different from the first TCI state.

According to a fifth aspect of embodiments of the disclosure, a first network device is provided. The first network device includes: a transceiver module, configured to send first information to a terminal, in which the first information is used for triggering the terminal to perform handover to a target cell, and the first network device is a network device corresponding to a current serving cell of the terminal.

According to a sixth aspect of embodiments of the disclosure, a second network device is provided. The second network device includes: a transceiver module, configured to send fourth information to a terminal, in which the fourth information is used to determine that the terminal successfully hands over to a target cell, and the second network device is a network device corresponding to the target cell.

According to a seventh aspect of embodiments of the disclosure, a communication device is provided. The communication device includes: one or more processors; in which the communication device may be configured to implement the method according to any optional implementation of the first aspect, the second aspect, or the third aspect.

According to an eighth aspect of embodiments of the disclosure, a storage medium is provided. The storage medium stores instructions, in which the instructions, when executed on a communication device, cause the communication device to implement the method described in any optional implementation of the first aspect, the second aspect, or the third aspect.

According to a ninth aspect of embodiments of the disclosure, a communication system is provided. The communication system may include: a terminal, configured to implement the method described in any optional implementation of the first aspect, a first network device, configured to implement the method described in any optional implementation of the second aspect, and a second network device, configured to implement the method described in any optional implementation of the third aspect.

The technical solutions provided by the embodiments of the disclosure may include the following beneficial effects. The first information sent by the first network device is received, in which the first information is used for triggering the terminal to perform handover to the target cell, and the first network device is the network device corresponding to the current serving cell of the terminal; the first TCI state is determined based on the first information, in which the first TCI state indicates the first beam, and the first beam is the beam used by the terminal during the process of performing handover to the target cell; and the second TCI state is determined, in which the second TCI state indicates the second beam, the second beam is the beam used by the terminal after handover to the target cell, and the second TCI state is the same as or different from the first TCI state. Thus, the terminal may determine the second beam used after handover to the target cell, so that the terminal hands over to the target cell and communicates via the target cell, thus improving handover success rate and communication efficiency.

In some embodiments of the disclosure, the terminal needs to use a corresponding beam for signal transmission (for example, transmission of data or signaling) after handover to the target cell. Thus, how to determine a transmission beam becomes a problem to be solved urgently.

It should be understood that the above general description and the following detailed description are only exemplary and explanatory, and do not limit embodiments of the disclosure.

### BRIEF DESCRIPTION OF THE DRAWINGS

In order to more clearly illustrate technical solutions in embodiments of the disclosure, the accompanying drawings for describing the embodiments are introduced below. The following accompanying drawings are merely some embodiments of the disclosure and do not specifically limit the scope of protection of the disclosure.
FIG. 1Ais a schematic diagram illustrating an architecture of a communication system according to an embodiment of the disclosure.
FIG. 1B is a schematic diagram illustrating configuration information according to an embodiment of the disclosure.
FIG. 2A is an interaction flowchart illustrating a method for beam indication according to an embodiment of the disclosure.
FIG. 2B is an interaction flowchart illustrating a method for beam indication according to an embodiment of the disclosure.
FIG. 2C is an interaction flowchart illustrating a method for beam indication according to an embodiment of the disclosure.
FIG. 3A is a flowchart illustrating a method for beam indication according to an embodiment of the disclosure.
FIG. 3B is a flowchart illustrating a method for beam indication according to an embodiment of the disclosure.
FIG. 3C is a flowchart illustrating a method for beam indication according to an embodiment of the disclosure.
FIG. 4A is a flowchart illustrating a method for beam indication according to an embodiment of the disclosure.
FIG. 4B is a flowchart illustrating a method for beam indication according to an embodiment of the disclosure.
FIG. 4C is a flowchart illustrating a method for beam indication according to an embodiment of the disclosure.
FIG. 5A is a flowchart illustrating a method for beam indication according to an embodiment of the disclosure.
FIG. 5B is a flowchart illustrating a method for beam indication according to an embodiment of the disclosure.
FIG. 5C is a flowchart illustrating a method for beam indication according to an embodiment of the disclosure.
FIG. 6 is a flowchart illustrating a method for beam indication according to an embodiment of the disclosure.
FIG. 7A is a block diagram illustrating a terminal according to an embodiment of the disclosure.
FIG. 7B is a block diagram illustrating a first network device according to an embodiment of the disclosure.
FIG. 7C is a block diagram illustrating a second network device according to an embodiment of the disclosure.
FIG. 8A is a block diagram illustrating a communication device according to an embodiment of the disclosure.
FIG. 8B is a block diagram illustrating a chip according to an embodiment of the disclosure.

### DETAILED DESCRIPTION

Embodiments of the disclosure provide a method for beam indication, a device, and a storage medium.

According to a first aspect, embodiments of the disclosure provide a method for beam indication. The method includes: receiving first information sent by a first network device, in which the first information is used for triggering a terminal to perform handover to a target cell, and the first network device is a network device corresponding to a current serving cell of the terminal; determining, based on the first information, a first transmission configuration indication (TCI) state, in which the first TCI state indicates a first beam, and the first beam is a beam used by the terminal during a process of performing handover to the target cell; and determining a second TCI state, in which the second TCI state indicates a second beam, the second beam is a beam used by the terminal after handover to the target cell, and the second TCI state is the same as or different from the first TCI state.

In the above embodiments, the terminal may determine the second beam used after handover to the target cell, so that the terminal hands over to the target cell and communicates via the target cell, thus improving handover success rate and communication efficiency.

In some embodiments in combination with the first aspect, in some embodiments, the first information includes a first identifier and/or a second identifier, the first identifier is a cell identifier of the target cell, and the second identifier is used to determine the first TCI state.

In the above embodiments, the terminal may determine the target cell for handover and the first TCI state based on the first information, thus improving flexibility of beam indication during a handover process.

In some embodiments in combination with the first aspect, in some embodiments, the method further includes: receiving second information sent by the first network device, in which the second information includes a first TCI set and parameters of candidate cells preconfigured by the first network device for the terminal, the first TCI set includes TCI states corresponding to the candidate cells, and the candidate cells are cells configured by the first network device for the terminal to perform beam measurement.

In the above embodiments, the first TCI set may be preconfigured via the second information, thus improving flexibility of handover control.

In some embodiments in combination with the first aspect, in some embodiments, the method further includes: receiving third information sent by the first network device, in which the third information is used for the terminal to activate one or more TCI states corresponding to one or more candidate cells in the first TCI set.

In the above embodiments, the TCI states may be activated via the third information, thus further improving flexibility of the handover control.

In some embodiments in combination with the first aspect, in some embodiments, the first TCI state is one of: at least one TCI state corresponding to the target cell in the first TCI set; or at least one TCI state that is in an active state and corresponds to the target cell in the first TCI set.

In the above embodiments, the first TCI state used during the handover process may be flexibly determined, thus enabling flexible control of the handover process.

In some embodiments in combination with the first aspect, in some embodiments, the second TCI state is one of: the first TCI state; or at least one TCI state that is in an active state and corresponds to the target cell in the first TCI set and is different from the first TCI state.

In the above embodiments, the first TCI state used after handover may be flexibly determined, thus enabling flexible control of signal transmission after handover.

In some embodiments in combination with the first aspect, in some embodiments, the method further includes: receiving fourth information sent by a second network device, in which the second network device is a network device corresponding to the target cell, and the fourth information is used to determine that the terminal successfully hands over to the target cell.

In the above embodiments, the fourth information may indicate that the terminal successfully hands over to the target cell, thus improving handover reliability.

In some embodiments in combination with the first aspect, in some embodiments, the fourth information is a first scheduled new transmission of the terminal on the target cell; or the fourth information is preset information, and the preset information is transmitted on a physical downlink shared channel (PDSCH) first scheduled in the target cell.

In the above embodiments, any one of the fourth information may indicate that the terminal successfully hands over to the target cell, thus improving flexibility of handover control.

In some embodiments in combination with the first aspect, in some embodiments, the method further includes: receiving fifth information sent by the second network device, in which the fifth information is used to indicate the terminal to deactivate a third TCI state, and the third TCI state is all or a part of TCI states in the first TCI set.

In the above embodiments, the third TCI state may be deactivated via the fifth information, thus reducing the number of TCI states activated by the terminal and lowering power consumption of the terminal.

In some embodiments in combination with the first aspect, in some embodiments, the TCI state includes a quasi co-location (QCL) source, and the QCL source includes at least one of: a synchronization signal block (SSB) of a candidate cell; or a channel state information reference signal (CSI-RS) of the candidate cell.

In the above embodiments, the SSB and/or CSI-RS may be used as a QCL source, thus enabling flexible beam indication.

In some embodiments in combination with the first aspect, in some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In the above embodiments, the first TCI set used for handover is flexibly implemented by associating the first TCI set with the second TCI set of the candidate cells.

In some embodiments in combination with the first aspect, in some embodiments, the method further includes: after determining that the terminal hands over to the target cell, keeping a fourth TCI state in an active state, in which the fourth TCI state includes one of: the first TCI state; a TCI state that is in the active state and corresponds to the target cell in the first TCI set; or a TCI state that is in the active state in the first TCI set.

In the above embodiments, the terminal may flexibly control the fourth TCI state kept in the active state, thus improving flexibility of beam indication based on the TCI state.

In some embodiments in combination with the first aspect, in some embodiments, the method further includes: receiving sixth information sent by the second network device, in which the sixth information indicates a fifth TCI state, and the fifth TCI state is a TCI state of the target cell.

In the above embodiments, the terminal may activate the fifth TCI state based on an indication of the second network device, thus improving flexibility of beam indication.

In some embodiments in combination with the first aspect, in some embodiments, the sixth information is used to indicate the terminal to activate the fifth TCI state and deactivate the second TCI state.

Thus, the target cell may deactivate the second TCI state and activate the fifth TCI state, thus further improving flexibility of beam indication.

In some embodiments in combination with the first aspect, in some embodiments, a manner in which the terminal performs handover to the target cell is a random access channel less (RACH-less) based handover.

In the above embodiments, success rate and communication efficiency of the terminal in performing the RACH-less based handover may be improved.

According to a second aspect, embodiments of the disclosure provide a method for beam indication. The method includes: sending first information to a terminal, in which the first information is used for triggering the terminal to perform handover to a target cell, and the first network device is a network device corresponding to a current serving cell of the terminal.

In the above embodiments, the first network device may indicate the terminal to determine the second beam used after handover to the target cell, so that the terminal hands over to the target cell and communicates via the target cell, thus improving handover success rate and communication efficiency.

In some embodiments in combination with the second aspect, in some embodiments, the first information includes a first identifier and/or a second identifier, the first identifier is a cell identifier of the target cell, and the second identifier is used to determine a first TCI state, in which the first TCI state indicates a first beam, and the first beam is a beam used by the terminal during a process of performing handover to the target cell.

In some embodiments in combination with the second aspect, in some embodiments, the method further includes: sending second information to the terminal, in which the second information includes a first TCI set and parameters of candidate cells preconfigured by the first network device for the terminal, the first TCI set includes TCI states corresponding to the candidate cells, and the candidate cells are cells configured by the first network device for the terminal to perform beam measurement.

In some embodiments in combination with the second aspect, in some embodiments, the method further includes: sending third information to the terminal, in which the third information is used for the terminal to activate one or more TCI states corresponding to one or more candidate cells in the first TCI set.

In some embodiments in combination with the second aspect, in some embodiments, the first TCI state is one of: at least one TCI state corresponding to the target cell in the first TCI set; or at least one TCI state that is in an active state and corresponds to the target cell in the first TCI set.

In some embodiments in combination with the second aspect, in some embodiments, a second TCI state is used for the terminal to determine a second beam, the second beam is a beam used by the terminal after handover to the target cell, and the second TCI state is one of: the first TCI state; or at least one TCI state that is in an active state and corresponds to the target cell in the first TCI set and is different from the first TCI state.

In some embodiments in combination with the second aspect, in some embodiments, the TCI state includes a QCL source, and the QCL source includes at least one of: an SSB of a candidate cell; or a CSI-RS of a candidate cell.

In some embodiments in combination with the second aspect, in some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments in combination with the second aspect, in some embodiments, a manner in which the terminal performs handover to the target cell is a handover based on RACH-less.

According to a third aspect, embodiments of the disclosure provide a method for beam indication. The method includes: sending fourth information to a terminal, in which the fourth information is used to determine that the terminal successfully hands over to a target cell, and the second network device is a network device corresponding to the target cell.

In the above embodiments, the second network device may indicate that the terminal successfully hands over to the target cell, thus improving handover success rate and communication efficiency.

In some embodiments in combination with the third aspect, in some embodiments, the fourth information is a first scheduled new transmission of the terminal on the target cell; or the fourth information is preset information, and the preset information is transmitted on a PDSCH first scheduled in the target cell.

In some embodiments in combination with the third aspect, in some embodiments, the method further includes: sending fifth information to the terminal, in which the fifth information is used to indicate the terminal to deactivate a third TCI state, and the third TCI state is all or a part of TCI states in the first TCI set, the first TCI set includes TCI states corresponding to candidate cells, and the candidate cells are cells configured by a first network device for the terminal to perform beam measurement.

In some embodiments in combination with the third aspect, in some embodiments, the TCI state includes a QCL source, and the QCL source includes at least one of: an SSB of a candidate cell; or a CSI-RS of a candidate cell.

In some embodiments in combination with the third aspect, in some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments in combination with the third aspect, in some embodiments, the method further includes: sending sixth information to the terminal, in which the sixth information indicates a fifth TCI state, and the fifth TCI state is a TCI state of the target cell.

In some embodiments in combination with the third aspect, in some embodiments, the sixth information is used to indicate the terminal to activate the fifth TCI state and deactivate the second TCI state.

In some embodiments in combination with the third aspect, in some embodiments, a manner in which the terminal performs handover to the target cell is a RACH-less based handover.

In a fourth aspect, embodiments of the disclosure provide a terminal. The terminal may include at least one of a transceiver module or a processing module, in which the terminal may be configured to perform optional implementations of the first aspect.

In a fifth aspect, embodiments of the disclosure provide a first network device. The first network device may include at least one of a transceiver module or a processing module, in which the first network device may be configured to perform optional implementations of the second aspect.

In a sixth aspect, embodiments of the disclosure provide a first network device. The second network device may include at least one of a transceiver module or a processing module, in which the second network device may be configured to perform optional implementations of the third aspect.

In a seventh aspect, embodiments of the disclosure provide a communication device. The communication device may include one or more processors, in which the communication device may be configured to perform optional implementations of the first aspect, the second aspect, or the third aspect.

In an eighth aspect, embodiments of the disclosure provide a storage medium. The storage medium stores instructions which, when executed on a communication device, cause the communication device to perform the method described in optional implementations of the first aspect, the second aspect, or the third aspect.

In a ninth aspect, embodiments of the disclosure provide a communication system. The communication system may include: a terminal, configured to perform the method described in optional implementations of the first aspect, a first network device, configured to perform the method described in optional implementations of the second aspect, and a third network device, configured to perform the method described in optional implementations of the third aspect.

In a tenth aspect, embodiments of the disclosure provide a program product. The program product, when executed by a communication device, causes the communication device to perform the method described in optional implementations of the first aspect, the second aspect, or the third aspect.

In an eleventh aspect, embodiments of the disclosure provide a computer program. When the computer program is running on a computer, the computer is caused to perform the method described in optional implementations of the first aspect, the second aspect, or the third aspect.

In a twelfth aspect, embodiments of the disclosure provide a chip or a chip system. The chip or chip system includes a processing circuit, configured to perform the method described in optional implementations of the first aspect, the second aspect, or the third aspect.

It may be understood that the terminal, the first network device, the second network device, the communication device, the communication system, the storage medium, the program product, the computer program and the chip or the chip system may be all used to implement the method in the embodiments of the disclosure. Thus, regarding beneficial effects they may achieve, reference may be made be to the beneficial effects in the corresponding methods, which are not repeated herein.

Embodiments of the disclosure provide a method for beam indication, a device, and a storage medium. In some embodiments, terms such as "method for beam indication", "method for information processing", and "communication method" may be used interchangeably; terms such as "apparatus for beam indication", "apparatus for information processing", "communication apparatus", and "communication device" may be used interchangeably; and terms such as "system for information processing", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be used interchangeably, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the network device may include at least one of an access network device or a core network device.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the terms such as "uplink" and "downlink" may also be replaced with the terms corresponding to the communication between the terminals (for example, "sidelink"). For example, the uplink channel, the downlink channel, etc. may be replaced with the sidelink channel or direct link channel, and the uplink, the downlink, etc. may be replaced with a sidelink or a direct link.

In some embodiments, the terminal may be replaced with the access network device, the core network device, or the network device. In this case, the access network device, the core network device, or the network device may also be configured to have a structure that has all or part of functions of the terminal.

In some embodiments, acquisition of data, information, etc. may comply with laws and regulations of a country to which the data is obtained.

In some embodiments, the data, the information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

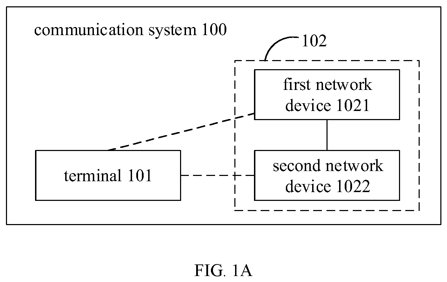

FIG. 1A is a schematic diagram illustrating an architecture of a communication system according to an embodiment of the disclosure. As shown in FIG. 1A, the communication system 100 may include a terminal 101 and a network device 102.

In some embodiments, the terminal 101 may include at least one of a mobile phone, a wearable device, an Internet of Things device, a vehicle with a communication function, a smart vehicle, a vehicle-mounted terminal, a Pad, a computer with a wireless receiving and sending function, a road side unit (RSU), a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device 102 includes at least one of the access network device, or the core network device.

In some embodiments, the access network device may be a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud radio access network (Cloud RAN), a base station in other communication systems, or an access node in a wireless fidelity (Wi-Fi) system, but is not limited herein.

In some embodiments, the technical solutions of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting a CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be a device, or may be a plurality of devices or device groups. The core network may include at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of a system architecture and emergence of new service scenarios, the technical solutions provided in the embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects than those shown in FIG. 1A. The number and the form of the subjects are arbitrary. The subjects may be physical or virtual. The connections between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM^{®}), CDMA2000, ultra mobile broadband (UMB), IEEE 802.11 (Wi-Fi^{®}), IEEE 802.16 (WiMAX^{®}), IEEE 802.20, Ultra-WideBand (UWB), Bluetooth^{®}, a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A with 5G, etc.) for application.

In some embodiments of the disclosure, as shown in FIG. 1A, the network device 102 may include a first network device 1021 and a second network device 1022.

In some embodiments, the terminal may perform cell handover between the first network device 1021 and the second network device 1022. For example, the first network device 1021 may be a network device corresponding to a current serving cell of the terminal, the serving cell may also be referred to as a source cell of handover, that is, a cell where the terminal performs signal transmission before handover, and the second network device 1022 may be a network device corresponding to a target cell of the terminal, that is, a cell where the terminal performs signal transmission after handover. Based on mobility management, the terminal may hand over from the source cell of the first network device 1021 to the target cell of the second network device 1022.

In some embodiments, the first network device 1021 and the second network device 1022 may be different access network devices (for example, base stations), and the source cell and the target cell may be cells respectively belonging to different access network devices (for example, base stations). Thus, the terminal may perform inter-site cell handover.

In other embodiments, the first network device 1021 and the second network device 1022 may be two cells under the same access network device (for example, a base station), one being the source cell and the other being the target cell. Thus, the terminal may perform intra-site cell handover.

In some embodiments, the above communication system may support layer 1 (L1) or layer 2 (L2) triggered mobility (LTM). Based on the LTM, the network device may configure one or more candidate cells (or candidate cell groups) for the terminal, and the network device may control the terminal to hand over to a target cell via a L1 signaling or a L2 signaling, in which the target cell may be a cell (or cell group) selected by the serving cell from the one or more candidate cells (or candidate cell groups) based on a beam measurement result.

For example, the terminal may perform handover based on the L1 signaling or the L2 signaling of the network device, for example, change the serving cell (or cell group) from a "source cell" to a target cell, in which the target cell is a cell (or cell group) selected by the serving cell from the one or more candidate cells (or candidate cell groups) based on the beam measurement result.

In some embodiments, the L1 signaling may include downlink control information (DCI).

In some embodiments, the L2 signaling may include a medium access control (MAC) control element (CE).

Optionally, the cell may also be a transmission/reception point (TRP), and the cell group may also be a TRP group.

In some embodiments, based on the LTM, the terminal may perform signal measurement on the one or more candidate cells, for example, may perform signal measurement based on a reference signal. Optionally, the reference signal may be an SSB, a CSI-RS, or another reference signal. Optionally, the terms such as "SSB" and "synchronization signal and physical downlink broadcast channel block" may be interchangeable.

In some embodiments, the signal measurement may be measurement used for the LTM.

Optionally, a name of the signal measurement is not limited, and may be, for example, "beam measurement", "L1 measurement", "measurement based on the LTM", "intra-frequency measurement", "neighbor cell measurement", "intra-frequency neighbor cell measurement", "intra-frequency L1 measurement", "L1-RSRP measurement", "L1-SINR measurement", "L1-RSRQ measurement", "intra-frequency L1-RSRP measurement", "intra-frequency L1-SINR measurement", "intra-frequency L1-RSRQ measurement", or the like.

In some embodiments, via the signal measurement, the terminal may obtain at least one of the following measurement results: a layer 1 reference signal receiving power (L1-RSRP); a layer 1 signal to interference plus noise ratio (L1-SINR); or a layer 1 reference signal receiving quality (L1-RSRQ).

In some embodiments of the disclosure, the terminal may perform a random access channel less (RACH-less) based handover. For example, the terminal may implement handover from a source cell to a target cell based on RACH-less LTM. In a RACH-less LTM procedure, the source cell may indicate a beam of the target cell to the terminal based on a cell switch command, and the terminal may send "first uplink data" to the target cell based on a configured grant (CG) resource via the beam, in which the "first uplink data" may be an acknowledgment message or an access message, used to notify or inform the target cell that the terminal will hand over to the target cell. After receiving the first uplink data, the target cell may send the DCI with scheduling information to the terminal via a PDCCH, and after receiving the scheduling information, or after receiving predefined information transmitted in a resource scheduled by the DCI, the terminal may determine that the current handover is completed.

Optionally, the CG resource may be a preconfigured CG physical uplink shared channel (PUSCH).

In some embodiments, a beam may also be referred to as beam, QCL Type D, spatial setting, spatial filter, spatial relation info, spatial RX parameters, spatial Tx parameter, TCI state, or the like, which is not limited in the embodiments of the disclosure.

In some embodiments, the beam may be determined based on a TCI state, and the TCI state may include a QCL source and a QCL Type. Different QCL types include different channel parameters, and two reference signals having a QCL relationship have same channel parameters (channel parameters included in the QCL type). The channel parameters may include one or more parameters such as Doppler shift, Doppler spread, average delay, delay spread, spatial Rx parameter, and the like.

In some embodiments, the QCL type may be one of: QCL Type A, in which the channel parameters included in the QCL Type A are Doppler shift, Doppler spread, average delay, and delay spread; QCL Type B, in which the channel parameters included in the QCL Type B are Doppler shift and Doppler spread; QCL Type C, in which the channel parameters included in the QCL Type C are average delay and Doppler shift; or QCL Type D, in which the channel parameter included in the QCL Type D is spatial Rx parameter.

Optionally, the QCL Type D may indicate beam information, that is, spatial Rx parameter. Under the assumption of beam correspondence, the spatial Tx parameter and the spatial Rx parameter of the terminal are the same.

In some embodiments of the disclosure, the source cell may indicate a beam of the target cell to the terminal, so that the terminal accesses the target cell via the beam. For beam indication in a handover process, one or more TCI states of candidate cells may be preconfigured for the terminal in advance via preconfiguration.

In an implementation, the source cell may activate a part or all of the preconfigured TCI states before sending a cell switch command, and indicate the TCI state of the target cell while indicating trigger of handover via the cell switch command, in which the TCI state indicates the beam (transmission beam) of the target cell.

In another implementation, the source cell may also, without activating the TCI state in advance, directly indicate activation of one TCI state while indicating trigger of handover via the cell switch command, in which the TCI state may be used to determine transmission beams of the terminal and the target cell.

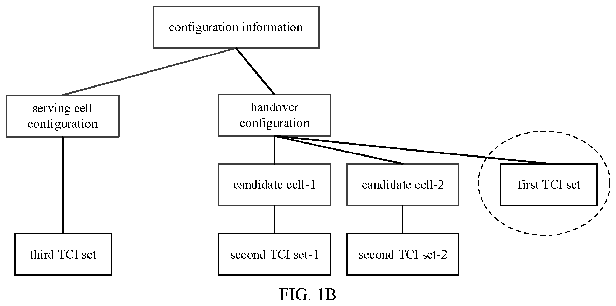

FIG. 1B is a schematic diagram illustrating configuration information according to an embodiment of the disclosure. As shown in FIG. 1B, a network device may send configuration information to a terminal, and the configuration information may include a serving cell configuration and a handover configuration.

In some embodiments, the serving cell configuration may include a third TCI set, and the third TCI set may include one or more TCI states of the serving cell.

In some embodiments, the handover configuration may also be referred to as an LTM configuration, and the handover configuration may include a first TCI set and parameters of at least one candidate cell.

In an implementation, the first TCI set may be referred to as an LTM TCI state pool.

In an implementation, the parameters of the candidate cell may include a second TCI set, and the second TCI set may include one or more TCI states of the candidate cell. As shown in FIG. 1B, a candidate cell-1 corresponds to a second TCI set-1, and a candidate cell-2 corresponds to a second TCI set-2.

In some embodiments, the configuration information may be referred to as an RRC preconfiguration. Optionally, the RRC preconfiguration may be RRC reconfiguration or other configuration information.

In some embodiments of the disclosure, the terminal needs to use a corresponding beam for signal transmission (for example, transmission of data or signaling) after handover to the target cell. Thus, how to determine a transmission beam becomes a problem to be solved urgently.

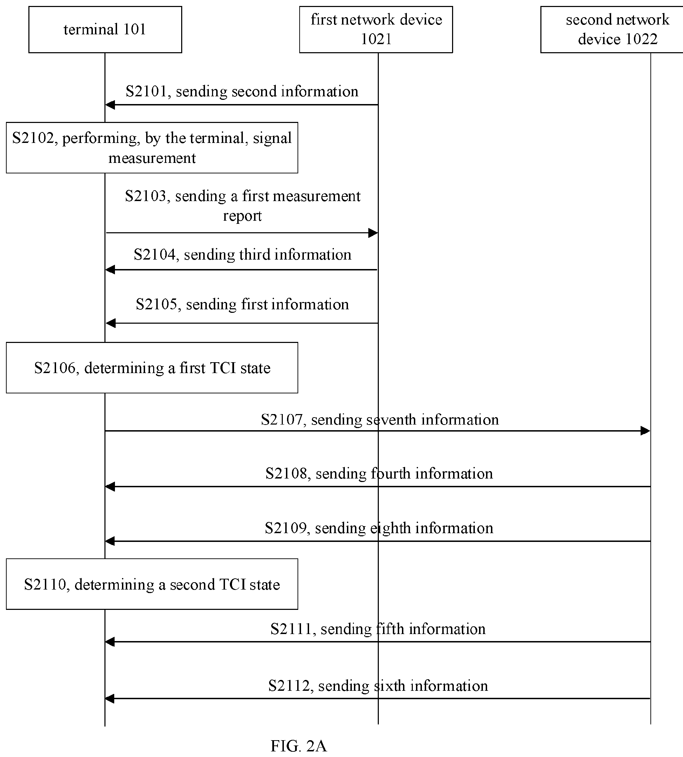

FIG. 2A is an interaction flowchart illustrating a method for beam indication according to an embodiment of the disclosure. The method may be performed by the communication system. As shown in FIG. 2A, the method may include the following steps S2101 to S2112.

At step S2101, a first network device sends second information to a terminal.

In some embodiments, the terminal may receive the second information. For example, the terminal may receive the second information sent by the first network device.

In some embodiments, the first network device is a network device corresponding to a serving cell of the terminal.

In some embodiments, the second information may include a first TCI set and parameters of candidate cells preconfigured by the first network device for the terminal, the first TCI set may include TCI states corresponding to the candidate cells, and the candidate cells are configured by the first network device for the terminal.

In some embodiments, the second information may be used to configure the first TCI set for the terminal.

In some embodiments, the second information may be used to configure parameters (for example, RRC parameters) of one or more candidate cells for the terminal.

In some embodiments, the second information may be used to configure configuration information related to cell handover (for example, LTM handover) for the terminal.

In some embodiments, a name of the second information is not limited, and may be, for example, "configuration information", "preconfiguration information", "handover preconfiguration information", "LTM preconfiguration information", "TCI preconfiguration information", "RRC preconfiguration information", or the like.

In some embodiments, the first TCI set may include one or more TCI states used for beam measurement.

In some embodiments, the first TCI set may include TCI states corresponding to the candidate cells, and the candidate cells may be cells configured by the first network device for the terminal to perform beam measurement.

Optionally, one candidate cell may correspond to one or more TCI states, the first TCI set may include TCI states of N candidate cells, each candidate cell respectively corresponds to at least one TCI state of the each candidate cell, and there are M TCI states in total, in which M and N are both positive integers, and M may be greater than or equal to N.

In some embodiments, a name of the first TCI set is not limited, and may be, for example, "LTM TCI state pool", "LTM TCI state list", "TCI state set used for signal measurement", "TCI state set used for LTM", "TCI state list used for LTM", "TCI states for beam indication during handover", or the like.

In some embodiments, a TCI state in the first TCI set may include a QCL source, and the QCL source may include at least one of: an SSB of a candidate cell; or a CSI-RS of a candidate cell.

In an implementation, the CSI-RS may be a tracking reference signal (TRS). Information of the TRS may be independently configured, and a QCL source of the TRS may be an SSB measured by L1.

In some embodiments, the first TCI set may be independent of the second TCI set. One second TCI set is a TCI set of one candidate cell.

For example, TCI states of respective candidate cells in the first TCI set may be configured the same as TCI states of respective candidate cells.

In some embodiments, the first TCI set may be associated with a TCI state of the candidate cell.

In an implementation, a TCI state corresponding to each candidate cell in the first TCI set may be a part or all of a second TCI set of the corresponding candidate cell.

For example, TCI state configuration parameters in the first TCI set may be the same as TCI state configuration parameters of the candidate cell. For example, a TCI state corresponding to each candidate cell in the first TCI set may be a part or all of a second TCI set of each candidate cell.

Optionally, the first TCI set may be a set configured separately but having the same TCI states as the candidate cell. For example, the first TCI set may be a separate information field in the second information, and the TCI state of the candidate cell is also a separate information field, and content in the information field of the first TCI set is the same as the TCI state of the candidate cell.

In another implementation, the first TCI set may include at least one TCI identifier, and one TCI identifier corresponds to one TCI state in a second TCI set of a candidate cell.

For example, the first TCI set may only include an identifier list of respective candidate cells, corresponding to TCI states configured under the respective candidate cells.

Optionally, the first network device may obtain and process RRC parameters of respective candidate cells in advance, to obtain configurations of TCI states and CSI-RS, thus performing beam indication.

Optionally, an actual first TCI set (LTM TCI state) may not exist, and beams during and after handover may actually be determined by a TCI state of the target cell.

Thus, by associating the first TCI set with the TCI sets of the candidate cells, the TCI state may be determined.

In some embodiments, the first network device may send a second message, and the second message may include the second information. For example, the first network device may send the second message to the terminal. Optionally, the terminal may receive the second message.

The second message may include at least one of an RRC message, a MAC CE, DCI, or other message sent by the first network device to the terminal.

In an implementation, the second message is an RRC message.

In some embodiments, the step S2101 may be omitted, the terminal may autonomously implement the function indicated by the second information, or the above function is default or preset. For example, the terminal may autonomously obtain the first TCI set, or obtain the first TCI set based on other message.

At step S2102, the terminal performs signal measurement.

In some embodiments, the terminal may perform beam measurement on candidate cells based on a preconfigured measurement reference signal.

In some embodiments, the beam measurement may be measurement for cell handover.

In some embodiments, the beam measurement may be measurement for LTM.

Optionally, a name of the signal measurement is not limited, and may be, for example, "beam measurement", "L1 measurement", "measurement based on LTM", "L1-RSRP measurement", or the like.

At step S2103, the terminal sends a first measurement report to the first network device.

In some embodiments, the first network device may receive the first measurement report. For example, the first network device may receive the first measurement report sent by the terminal.

In some embodiments, the first measurement report may be used to report, to the first network device, beam measurement results of respective candidate cells or beam measurement results of the candidate cells and the serving cell.

In some embodiments, a name of the first measurement report is not limited, and may be, for example, "LTM measurement report", "measurement result information", or the like.

In some embodiments, the terminal may send a first report message, and the first report message may include the first measurement report. For example, the terminal may send the first report message to the first network device. Optionally, the first network device may receive the first report message.

At step S2104, the first network device sends third information to the terminal.

In some embodiments, the terminal may receive the third information. For example, the terminal may receive the third information sent by the first network device.

In some embodiments, the third information may be used for the terminal to activate one or more TCI states corresponding to one or more candidate cells in the first TCI set.

In some embodiments, the third information may be used for the terminal to activate the at least one TCI state in the first TCI set.

In some embodiments, the third information may be used to indicate the terminal to activate the at least one TCI state in the first TCI set.

In some embodiments, the third information may be used to indicate the terminal to activate the at least one TCI state used for signal measurement.

In some embodiments, a name of the third information is not limited, and may be, for example, "TCI state activation information", "information used for activating a TCI state", "activation information", or the like.

In some embodiments, the first network device may determine, based on the first measurement report, at least one TCI state to be activated, and send the third information, and activate the at least one TCI state via the third information. For example, the first network device may select, based on the first measurement report, a candidate cell most likely to undergo handover or a candidate cell with a strongest signal strength, and use one or more TCI states under the selected candidate cell as the TCI state(s) to be activated.

In other embodiments, the first network device may autonomously determine the at least one TCI state to be activated, and send the third information.

In some embodiments, the first network device may send a third message, and the third message may include the third information. For example, the first network device may send the third message to the terminal. Optionally, the terminal may receive the third message.

The third message may include at least one of an RRC message, a MAC CE, DCI, or other message sent by the first network device to the terminal.

In an implementation, the third message is a MAC CE or DCI.

In some embodiments, the step S2104 may be omitted.

At step S2105, the first network device sends first information to the terminal.

In some embodiments, the terminal may receive the first information. For example, the terminal may receive the first information sent by the first network device.

In some embodiments, the first information may trigger the terminal to hand over to a target cell or to perform handover to a target cell.

In some embodiments, a name of the first information is not limited, and may be, for example, "cell switch command", "handover indication", "handover command", or the like.

In some embodiments, a manner in which the terminal performs handover to the target cell may be an RACH-less based handover.

In some embodiments, the first information may include a first identifier and/or a second identifier, in which: the first identifier may be a cell identifier of the target cell, and the second identifier may be used to determine the first TCI state.

In some embodiments, the first TCI state may indicate a first beam, and the first beam may be a beam used by the terminal during a process of performing handover to the target cell.

In some embodiments, the first TCI state may be a TCI state in the first TCI set.

In an implementation, the first TCI state may be the at least one TCI state corresponding to the target cell in the first TCI set.

In another implementation, the first TCI state may be the at least one TCI state that is in an active state and corresponds to the target cell in the first TCI set.

In some embodiments, the first TCI state may be a TCI state corresponding to the target cell.

In some embodiments, the first network device may determine the target cell, and use the at least one TCI state corresponding to the target cell as the first TCI state. For example, the first network device may determine the target cell and the first TCI state of the target cell based on beam measurement. For example, a candidate cell with a strongest signal strength may be used as the target cell for handover. For another example, the first network device may determine the target cell based on other determination criteria.

In some embodiments, the first network device may send a first message, and the first message may include the first information. For example, the first network device may send the first message to the terminal. Optionally, the terminal may receive the first message. Optionally, the first message may further include the third information.

The first message may include at least one of an RRC message, a MAC CE, DCI, or other message sent by the first network device to the terminal.

In an implementation, the first message is a MAC CE or DCI.

At step S2106, the terminal determines a first TCI state.

In some embodiments, the terminal may determine the first TCI state based on the first information.

In some embodiments, the terminal may determine the first TCI state in response to receiving the first information.

In some embodiments, the terminal may determine the first TCI state based on the second identifier in the first message.

In some embodiments, the terminal may determine the first beam based on the first TCI state, and use the first beam to perform signal transmission during the process of performing handover to the target cell. For example, the terminal may use the first beam to send a signal to the target cell, or receive a signal from the target cell.

At step S2107, the terminal sends seventh information to a second network device.

In some embodiments, the second network device may receive the seventh information. For example, the second network device may receive the seventh information sent by the terminal.

In some embodiments, the second network device may be a network device corresponding to the target cell.

In some embodiments, the seventh information may indicate that the terminal accesses the second network device.

In some embodiments, the seventh information may be an access message or an acknowledgment message.

In some embodiments, a name of the seventh information is not limited, and may be, for example, "access message", "acknowledgment message", "handover indication", "access indication", "first uplink data", "first UL data", or the like.

In some embodiments, the terminal may send the seventh information via the first beam. Likewise, the second network device may also receive the seventh information via the first beam.

At step S2108, the second network device sends fourth information to the terminal.

In some embodiments, the terminal may receive the fourth information. For example, the terminal may receive the fourth information sent by the second network device.

In some embodiments, the fourth information may indicate that the seventh information sent by the terminal is successfully received by the target cell.

In some embodiments, the fourth information may be used to determine that the terminal successfully hands over to the target cell.

In some embodiments, the fourth information may indicate that the terminal successfully hands over to the target cell.

In some embodiments, a name of the fourth information is not limited, and may be, for example, "handover completion information", "handover success information", "first PDCCH scheduling", or the like.

In some embodiments, the second network device may send the fourth information via the first beam. Likewise, the terminal may also receive the fourth information via the first beam.

In some embodiments, the fourth information may be DCI of a resource first scheduled received by the terminal on the target cell. For example, a resource scheduled by the fourth information may be a PUSCH resource or a PDSCH resource.

In other embodiments, what is scheduled by the fourth information is a PDSCH, and preset information is transmitted. For example, the fourth information may be preset information specified by a protocol, and is transmitted on a PDSCH scheduled by the fourth information sent by the target cell.

At step S2109, the second network device sends eighth information to the terminal.

In some embodiments, the terminal may receive the eighth information. For example, the terminal may receive the eighth information sent by the second network device.

In some embodiments, the eighth information may indicate a sixth TCI state.

In some embodiments, the eighth information is carried on a PDSCH scheduled by the fourth information for transmission.

In some embodiments, the terminal may determine the sixth TCI state based on the eighth information, and keep the sixth TCI state in the active state.

In some embodiments, the step S2109 is an optional step, and the terminal may, in response to receiving the fourth information, autonomously determine the sixth TCI state.

In some embodiments, the sixth TCI state may be at least one of fourth TCI states, and the fourth TCI states may be TCI states that are kept in the active state for the terminal after handover.

In some embodiments, after determining that the terminal hands over to the target cell (for example, receiving the fourth information), a fourth TCI state may be kept in the active state. The fourth TCI state may include one of: the first TCI state; a TCI state that is in the active state and corresponds to the target cell in the first TCI set; or a TCI state that is in the active state in the first TCI set. In an optional implementation, the fourth TCI state may be the first TCI state.

For example, after handover is completed, among the activated TCI states (LTM TCI states), all other TCI states other than the first TCI state indicated by the first information (handover signaling) are deactivated. Optionally, before the target cell indicates a TCI state under configuration of the target cell, the terminal may use the first beam indicated by the first TCI state.

In another optional implementation, the fourth TCI state may be a TCI state that is in the active state and corresponds to the target cell in the first TCI set.

For example, after handover is completed, the terminal may deactivate all activated TCI states of other candidate cells, but maintain the TCI state of the target cell activated.

Optionally, identification information may be included in the second information or third information, and the identification information is used to determine which candidate cell a TCI state in the first TCI set respectively corresponds to, or which candidate cell an activated TCI state corresponds to, or which candidate cell an indicated TCI state corresponds to.

Optionally, before the target cell indicates a TCI state under configuration of the target cell, the target cell may indicate a TCI state among the fourth TCI states for updating the transmission beam.

In another optional implementation, the fourth TCI state may be a TCI state that is in the active state in the first TCI set.

For example, after handover is completed, the terminal may retain all activated TCI states in the first TCI set, so as to support subsequent LTM.

Optionally, before the target cell indicates a TCI state under configuration of the target cell, the target cell may indicate a TCI state corresponding to the target cell among the fourth TCI states for updating a transmission beam.

Optionally, explicit deactivation signaling may be defined. For example, the second network device may deactivate a TCI state via fifth information.

In some embodiments, the target cell (second network device) may indicate a TCI state of the target cell. For example, the second network device indicates a TCI state of the second network device to the terminal via sixth information.

In some embodiments of the disclosure, corresponding to different design manners of the first TCI set, different fourth TCI states may be determined.

In a first optional implementation, the first TCI set may be designed independently (not associated with the second TCI set of the candidate cell), and a QCL source is an SSB.

In this manner, after determining that the terminal hands over to the target cell, the fourth TCI state may be kept in the active state. The fourth TCI state is the first TCI state.

In a second optional implementation, the first TCI set may be designed independently (not associated with the second TCI set of the candidate cell), and a QCL source is a CSI-RS (for example, a TRS).

In this manner, after determining that the terminal hands over to the target cell, the fourth TCI state may be kept in the active state. The fourth TCI state is one of: the first TCI state; a TCI state that is in the active state and corresponds to the target cell in the first TCI set; or a TCI state that is in the active state in the first TCI set.

In a third optional implementation, the first TCI set may be associated with the second TCI set of the candidate cell, and the first TCI set may be a union of at least one second TCI set, and one second TCI set is a TCI set of one candidate cell.

In this manner, after determining that the terminal hands over to the target cell, the fourth TCI state may be kept in the active state. The fourth TCI state is one of: a TCI state that is in the active state and corresponds to the target cell in the first TCI set; or a TCI state that is in the active state in the first TCI set.

In a fourth optional implementation, the first TCI set may be associated with the second TCI set of the candidate cell, and the first TCI set may include at least one TCI identifier, and one TCI identifier corresponds to one TCI state in the second TCI set.

In this manner, after determining that the terminal hands over to the target cell, the fourth TCI state may be kept in the active state. The fourth TCI state is one of: a TCI state that is in the active state and corresponds to the target cell in the first TCI set; or a TCI state that is in the active state in the first TCI set.

At step S2110, the terminal determines a second TCI state.

In some embodiments, the second TCI state may indicate a second beam, and the second beam may be a beam used by the terminal after handover to the target cell. For example, after successfully handing over to the target cell, the terminal may send data and/or a signaling to the target cell via the second beam.

In some embodiments, the second TCI state and the first TCI state may be the same or different.

In some embodiments, the second TCI state may be the first TCI state.

In other embodiments, the second TCI state may be the sixth TCI state, that is, the TCI state indicated by the eighth information. For example, the second TCI state may be at least one TCI state that is in the active state and corresponds to the target cell in the first TCI set and is different from the first TCI state.

In other embodiments, the second TCI state may be at least one TCI state that is in the active state and corresponds to the target cell in the first TCI set, for example, other TCI states other than the first TCI state and the sixth TCI state.

At step S2111, the second network device sends fifth information to the terminal.

In some embodiments, the terminal may receive the fifth information. For example, the terminal may receive the fifth information sent by the second network device.

In some embodiments, the fifth information may be used to indicate the terminal to deactivate a TCI state.

In some embodiments, the fifth information may be used to indicate the terminal to deactivate a third TCI state.

In an implementation, the third TCI state may be all or a part of TCI states in the first TCI set.

In another implementation, the third TCI state may be a subset or a full set of TCI states that are in the active state in the first TCI set.

In another implementation, the third TCI state may be a TCI state that is currently in the active state and determined by the network device as not needing to remain in the active state (for example, a TCI state that is not currently used for data transmission).

In another implementation, the third TCI state does not include the second TCI state.

In another implementation, the third TCI state may be a TCI state other than the second TCI state among the TCI states that are in the active state in the first TCI set.

In some embodiments, a name of the fifth information is not limited, and may be, for example, "deactivation information", "deactivation signaling", "TCI state deactivation signaling", or the like.

Thus, corresponding TCI states may be deactivated via the fifth information, which avoids the terminal maintaining activation of too many TCI states, reduces power consumption of the terminal, and improves performance of the terminal.

In some embodiments, the second network device may send a fifth message, and the fifth message may include the fifth information. For example, the second network device may send the fifth message to the terminal. Optionally, the terminal may receive the fifth message.

The fifth message may include at least one of an RRC message, a MAC CE, DCI, or other message sent by the second network device to the terminal.

In some embodiments, the fifth information may be a MAC CE or DCI.

In some embodiments, the step S2111 may be omitted, the terminal may autonomously implement the function indicated by the fifth information, or the above function is default or preset. For example, the terminal may autonomously deactivate the third TCI state.

At step S2112, the second network device sends the sixth information to the terminal.

In some embodiments, the terminal may receive the sixth information. For example, the terminal may receive the sixth information sent by the second network device.

In some embodiments, the sixth information may indicate a fifth TCI state, and the fifth TCI state may be a TCI state of the target cell.

In some embodiments, the sixth information may be used to activate the fifth TCI state for the terminal.

In some embodiments, the sixth information may indicate the fifth TCI state to the terminal.

In some embodiments, a name of the sixth information is not limited, and may be, for example, "TCI state configuration information", "TCI state activation information", "TCI state indication information", or the like.

In some embodiments, after receiving the sixth information, the terminal may deactivate the second TCI state and activate the fifth TCI state.

In some embodiments, after receiving the sixth information, the terminal may deactivate all other TCI states other than the fifth TCI state.

In some embodiments, the second network device may send a sixth message, and the sixth message may include the sixth information. For example, the second network device may send the sixth message to the terminal. Optionally, the terminal may receive the sixth message.

The sixth message may include at least one of an RRC message, a MAC CE, DCI, or other message sent by the second network device to the terminal.

In some embodiments, the step S2112 may be omitted. For example, the terminal may always use the second TCI state.

The method in embodiments of the disclosure may include at least one of steps S2101 to S2112. For example, the step S2105 may be performed as an independent embodiment; the step S2110 may be performed as an independent embodiment; the step S2105, the step S2106, and the step S2110 may be performed as an independent embodiment; the step S2101, the step S2104, the step S2105, the step S2106, the step S2108, and the step S2110 may be performed as an independent embodiment; the step S2101, the step S2104, the step S2105, the step S2106, the step S2107, the step S2108, and the step S2110 may be performed as an independent embodiment; the step S2101, the step S2104, the step S2105, the step S2106, the step S2107, the step S2108, the step S2109, and the step S2110 may be performed as an independent embodiment; the step S2101, the step S2104, the step S2105, the step S2106, the step S2107, the step S2108, the step S2110, and the step S2112 may be performed as an independent embodiment; the step S2101, the step S2104, the step S2105, the step S2106, the step S2107, the step S2108, the step S2110, the step S2111, and the step S2112 may be performed as an independent embodiment; the step S2105, the step S2106, the step S2107, the step S2108, and the step S2110 may be performed as an independent embodiment; the step S2105, the step S2106, the step S2107, the step S2108, the step S2110, and the step S2112 may be performed as an independent embodiment; the step S2105, the step S2106, the step S2107, the step S2108, the step S2110, and the step S2111 may be performed as an independent embodiment; the step S2105, the step S2106, the step S2107, the step S2108, the step S2110, the step S2111, and the step S2112 may be performed as an independent embodiment, which is not limited herein.

In some embodiments, the order of the steps S2101 to S2112 may be interchanged or the steps may be performed simultaneously.

In some embodiments, the steps S2101 to S2112 are all optional steps.

In some embodiments, reference may be made to other optional implementations described before or after the embodiments corresponding to FIG. 2A.

Thus, the terminal may use the first beam to hand over to the target cell during the handover process, use the second beam to perform signal transmission after handover to the target cell, and deactivate or activate the TCI state based on the indication of the target cell after handover, thus providing a flexible beam indication and control method, and improving handover success rate and communication efficiency.

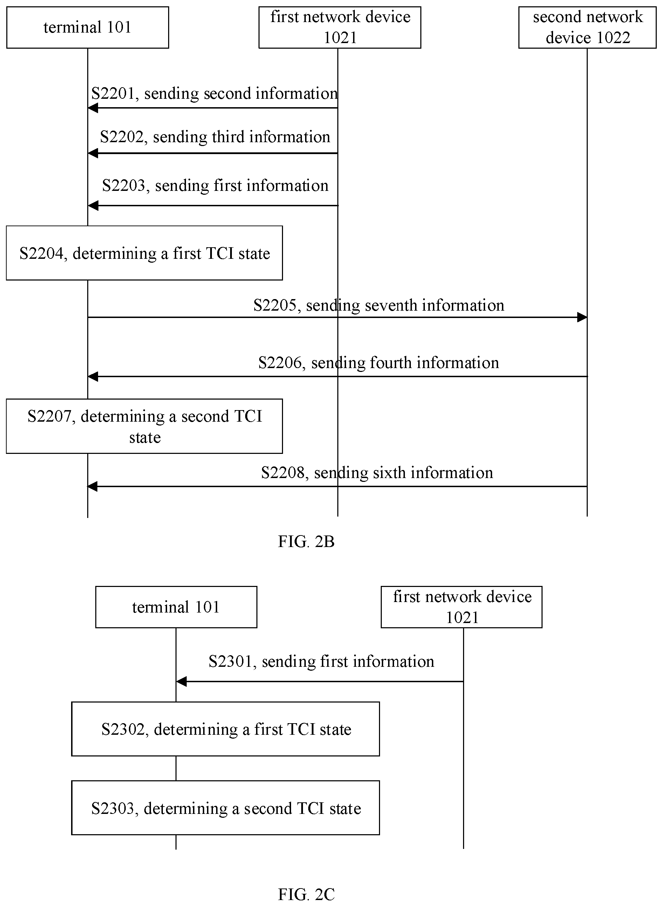

FIG. 2B is an interaction flowchart illustrating a method for beam indication according to an embodiment of the disclosure. As shown in FIG. 2B, embodiments of the disclosure relate to a method for beam indication, the method may be performed by a communication system, and the method may include the following steps S2201 to S2208.

At step S2201, a first network device sends second information to a terminal.

For optional implementations of the step S2201, reference may be made to the optional implementations of the step S2101 in FIG. 2A and other related parts of the embodiments involved in FIG. 2A, and details are not repeated herein.

At step S2202, the first network device sends third information to the terminal.

For optional implementations of the step S2202, reference may be made to the optional implementations of the step S2104 in FIG. 2A and other related parts of the embodiments involved in FIG. 2A, and details are not repeated herein.

At step S2203, the first network device sends first information to the terminal.

For optional implementations of the step S2203, reference may be made to the optional implementations of the step S2105 in FIG. 2A and other related parts of the embodiments involved in FIG. 2A, and details are not repeated herein.

At step S2204, the terminal determines a first TCI state.

For optional implementations of the step S2204, reference may be made to the optional implementations of the step S2106 in FIG. 2A and other related parts of the embodiments involved in FIG. 2A, and details are not repeated herein.

At step S2205, the terminal sends seventh information to a second network device.

For optional implementations of the step S2205, reference may be made to the optional implementations of the step S2107 in FIG. 2A and other related parts of the embodiments involved in FIG. 2A, and details are not repeated herein.

At step S2206, the second network device sends fourth information to the terminal.

For optional implementations of the step S2206, reference may be made to the optional implementations of the step S2108 in FIG. 2A and other related parts of the embodiments involved in FIG. 2A, and details are not repeated herein.

At step S2208, the terminal determines a second TCI state.

For optional implementations of the step S2208, reference may be made to the optional implementations of the step S2110 in FIG. 2A and other related parts of the embodiments involved in FIG. 2A, and details are not repeated herein.

At step S2208, the second network device sends sixth information to the terminal.

For optional implementations of the step S2208, reference may be made to the optional implementations of the step S2112 in FIG. 2A and other related parts of the embodiments involved in FIG. 2A, and details are not repeated herein.

In some embodiments, the order of the steps S2201 to S2208 may be interchanged or the steps may be performed simultaneously.

In some embodiments, the steps S2201 to S2208 are all optional steps.

In some embodiments, the embodiments shown in FIG. 2B may further be combined with any one or more steps in the embodiments shown in FIG. 2A to form a new embodiment.

Thus, the terminal may use the first beam to hand over to the target cell during the handover process, use the second beam to perform signal transmission after handover to the target cell, and activate the TCI state of the target cell based on the indication of the target cell after handover, thus improving handover success rate and communication efficiency.

FIG. 2C is an interaction flowchart illustrating a method for beam indication according to an embodiment of the disclosure. As shown in FIG. 2C, embodiments of the disclosure relate to a method for beam indication, the method may be performed by a communication system, and the method may include the following steps S2301 to S2303.

At step S2301, a first network device sends first information to a terminal.

For optional implementations of the step S2301, reference may be made to the optional implementations of the step S2105 in FIG. 2A and other related parts of the embodiments involved in FIG. 2A, and details are not repeated herein.

At step S2302, the terminal determines a first TCI state.

For optional implementations of the step S2302, reference may be made to the optional implementations of the step S2106 in FIG. 2A and other related parts of the embodiments involved in FIG. 2A, and details are not repeated herein.

At step S2303, the terminal determines a second TCI state.

For optional implementations of the step S2303, reference may be made to the optional implementations of the step S2110 in FIG. 2A and other related parts of the embodiments involved in FIG. 2A, and details are not repeated herein.

In some embodiments, the order of the steps S2301 to S2303 may be interchanged or the steps may be performed simultaneously.

In some embodiments, the steps S2301 to S2303 are all optional steps.

In some embodiments, the embodiments shown in FIG. 2C may further be combined with any one or more steps in the embodiments shown in FIG. 2A to form a new embodiment.

Thus, the terminal may determine the second beam used after handover to the target cell, so that the terminal hands over to the target cell and communicates via the target cell, thus improving handover success rate and communication efficiency.

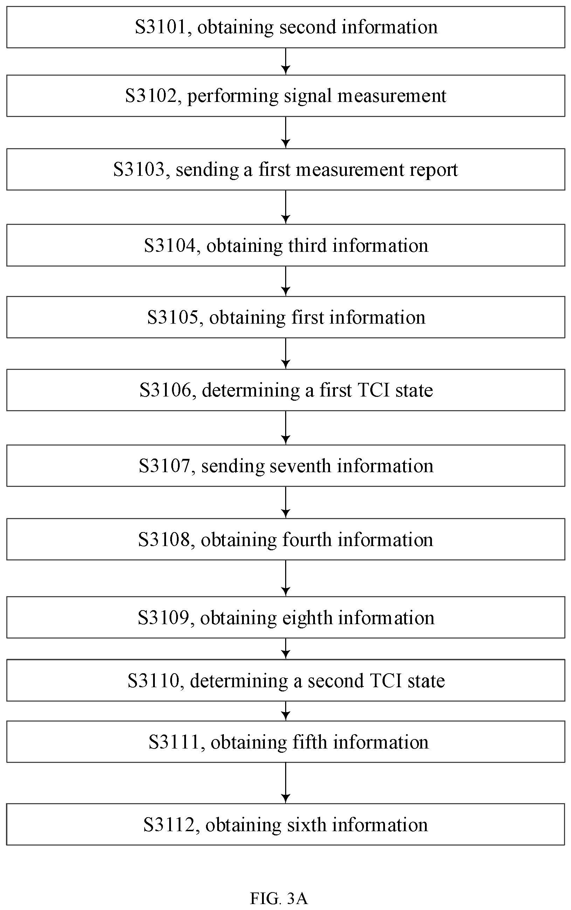

FIG. 3A is a flowchart illustrating a method for beam indication according to an embodiment of the disclosure. As shown in FIG. 3A, embodiments of the disclosure relate to a method for beam indication, and the method may be performed by a terminal. The method may include the following steps S3101 to S3112.

At step S3101, second information is obtained.

For optional implementations of the step S3101, reference may be made to the optional implementations of the step S2101 in FIG. 2A and other related parts of the embodiments involved in FIG. 2A, and details are not repeated herein.

In some embodiments, the terminal may receive the second information sent by a first network device, but the disclosure is not limited herein, and the terminal may also receive the second information sent by other entities.

In some embodiments, the terminal may obtain the second information specified by a protocol.

In some embodiments, the terminal may obtain the second information from upper layer(s).

In some embodiments, the terminal may obtain the second information by performing processing.

In some embodiments, the step S3101 may be omitted, and the terminal may autonomously implement a function indicated by the second information, or the above function is default or preset.

At step S3102, signal measurement is performed.

For optional implementations of the step S3102, reference may be made to the optional implementations of the step S2102 in FIG. 2A and other related parts of the embodiments involved in FIG. 2A, and details are not repeated herein.

At step S3103, a first measurement report is sent.

For optional implementations of the step S3103, reference may be made to the optional implementations of the step S2103 in FIG. 2A and other related parts of the embodiments involved in FIG. 2A, and details are not repeated herein.

In some embodiments, the terminal may send the first measurement report to the first network device, but the disclosure is not limited herein, and the terminal may also send the first measurement report to other entities.

At step S3104, third information is obtained.

For optional implementations of the step S3104, reference may be made to the optional implementations of the step S2104 in FIG. 2A and other related parts of the embodiments involved in FIG. 2A, and details are not repeated herein.

In some embodiments, the terminal may receive the third information sent by the first network device, but the disclosure is not limited herein, and the terminal may also receive the third information sent by other entities.

In some embodiments, the terminal may obtain the third information specified by a protocol.

In some embodiments, the terminal may obtain the third information from the upper layer(s).

In some embodiments, the terminal may obtain the third information by performing processing.

In some embodiments, the step S3104 may be omitted, and the terminal may autonomously implement a function indicated by the third information, or the above function is default or preset.

At step S3105, first information is obtained.

For optional implementations of the step S3105, reference may be made to the optional implementations of the step S2105 in FIG. 2A and other related parts of the embodiments involved in FIG. 2A, and details are not repeated herein.

In some embodiments, the terminal may receive the first information sent by the first network device, but the disclosure is not limited herein, and the terminal may also receive the first information sent by other entities.

In some embodiments, the terminal may obtain the first information specified by the protocol.

In some embodiments, the terminal may obtain the first information from the upper layer(s).

In some embodiments, the terminal may obtain the first information by performing processing.

In some embodiments, the step S3105 may be omitted, and the terminal may autonomously implement a function indicated by the first information, or the above function is default or preset.

At step S3106, a first TCI state is determined.

For optional implementations of the step S3106, reference may be made to the optional implementations of the step S2106 in FIG. 2A and other related parts of the embodiments involved in FIG. 2A, and details are not repeated herein.

At step S3107, seventh information is sent.

For optional implementations of the step S3107, reference may be made to the optional implementations of the step S2107 in FIG. 2A and other related parts of the embodiments involved in FIG. 2A, and details are not repeated herein.

In some embodiments, the terminal may send the seventh information to a second network device, but the disclosure is not limited herein, and the terminal may also send the seventh information to other entities.

At step S3108, fourth information is obtained.

For optional implementations of the step S3108, reference may be made to the optional implementations of the step S2108 in FIG. 2A and other related parts of the embodiments involved in FIG. 2A, and details are not repeated herein.

In some embodiments, the terminal may receive the fourth information sent by the second network device, but the disclosure is not limited herein, and the terminal may also receive the fourth information sent by other entities.

In some embodiments, the terminal may obtain the fourth information specified by the protocol.

In some embodiments, the terminal may obtain the fourth information from the upper layer(s).

In some embodiments, the terminal may obtain the fourth information by performing processing.

In some embodiments, the step S3108 may be omitted, and the terminal may autonomously implement a function indicated by the fourth information, or the above function is default or preset.

At step S3110, a second TCI state is determined.

For optional implementations of the step S3110, reference may be made to the optional implementations of the step S2110 in FIG. 2A and other related parts of the embodiments involved in FIG. 2A, and details are not repeated herein.

At step S3111, fifth information is obtained.

For optional implementations of the step S3111, reference may be made to the optional implementations of the step S2111 in FIG. 2A and other related parts of the embodiments involved in FIG. 2A, and details are not repeated herein.

In some embodiments, the terminal may receive the fifth information sent by a second network device, but the disclosure is not limited herein, and the terminal may also receive the fifth information sent by other entities.

In some embodiments, the terminal may obtain the fifth information specified by the protocol.

In some embodiments, the terminal may obtain the fifth information from the upper layer(s).

In some embodiments, the terminal may obtain the fifth information by performing processing.

In some embodiments, the step S3111 may be omitted, and the terminal may autonomously implement a function indicated by the fifth information, or the above function is default or preset.

At step S3112, sixth information is obtained.

For optional implementations of the step S3112, reference may be made to the optional implementations of the step S2112 in FIG. 2A and other related parts of the embodiments involved in FIG. 2A, and details are not repeated herein.

In some embodiments, the terminal may receive the sixth information sent by the second network device, but the disclosure is not limited herein, and the terminal may also receive the sixth information sent by other entities.

In some embodiments, the terminal may obtain the sixth information specified by the protocol.

In some embodiments, the terminal may obtain the sixth information from the upper layer(s).

In some embodiments, the terminal may obtain the sixth information by perform processing.

In some embodiments, the step S3112 may be omitted, and the terminal may autonomously implement a function indicated by the sixth information, or the above function is default or preset.

The method in embodiments of the disclosure may include at least one of steps S3101 to S3112. For example, the step S3105 may be performed as an independent embodiment; the step S3110 may be performed as an independent embodiment; the step S3105, the step S3106, and the step S3110 may be performed as an independent embodiment; the step S3101, the step S3104, the step S3105, the step S3106, the step S3108, and the step S3110 may be performed as an independent embodiment; the step S3101, the step S3104, the step S3105, the step S3106, the step S3107, the step S3108, and the step S3110 may be performed as an independent embodiment; the step S3101, the step S3104, the step S3105, the step S3106, the step S3107, the step S3108, the step S3109, and the step S3110 may be performed as an independent embodiment; the step S3101, the step S3104, the step S3105, the step S3106, the step S3107, the step S3108, the step S3110, and the step S3112 may be performed as an independent embodiment; the step S3101, the step S3104, the step S3105, the step S3106, the step S3107, the step S3108, the step S3110, the step S3111, and the step S3112 may be performed as an independent embodiment; the step S3105, the step S3106, the step S3107, the step S3108, and the step S3110 may be performed as an independent embodiment; the step S3105, the step S3106, the step S3107, the step S3108, the step S3110, and the step S3112 may be performed as an independent embodiment; the step S3105, the step S3106, the step S3107, the step S3108, the step S3110, and the step S3111 may be performed as an independent embodiment; the step S3105, the step S3106, the step S3107, the step S3108, the step S3110, the step S3111, and the step S3112 may be performed as an independent embodiment, which is not limited herein.

In some embodiments, the order of the steps S3101 to S3112 may be interchanged or the steps may be performed simultaneously.

In some embodiments, the steps S3101 to S3112 are all optional steps.

Thus, the terminal may use the first beam to hand over to the target cell during the handover process, use the second beam to perform signal transmission after handover to the target cell, and deactivate or activate the TCI state based on the indication of the target cell after handover, thus providing a flexible beam indication and control method, and improving handover success rate and communication efficiency.

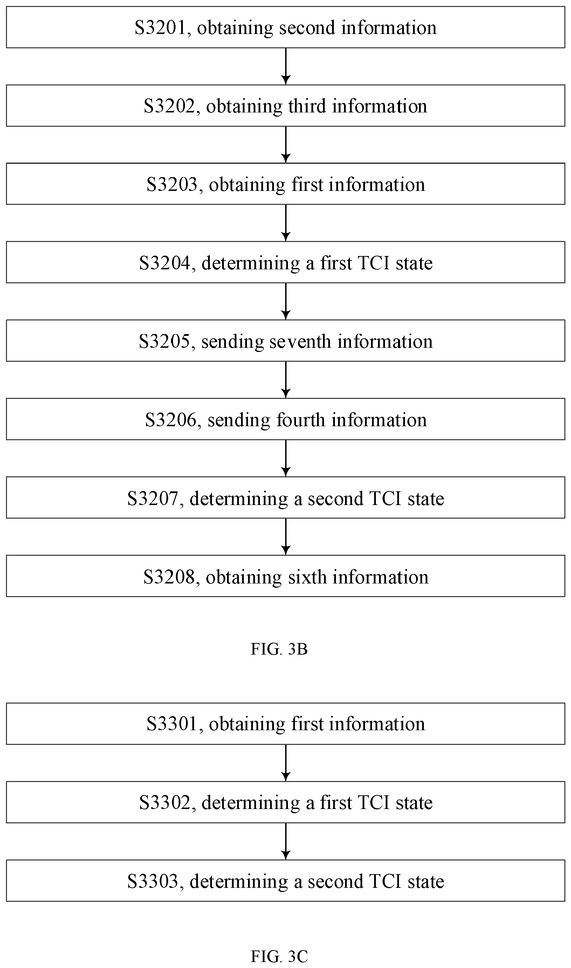

FIG. 3B is a flowchart illustrating a method for beam indication according to an embodiment of the disclosure. As shown in FIG. 3B, embodiments of the disclosure relate to a method for beam indication, and the method may be performed by a terminal. The method may include the following steps S3201 to S3208.

At step S3201, second information is obtained.

For optional implementations of the step S3201, reference may be made to the optional implementations of the step S2101 in FIG. 2A and the step S3101 in FIG. 3A, and other related parts of the embodiments involved in FIG. 2A and FIG. 3A, and details are not repeated herein.

At step S3202, third information is obtained.

For optional implementations of the step S3202, reference may be made to the optional implementations of the step S2104 in FIG. 2A and the step S3104 in FIG. 3A, and other related parts of the embodiments involved in FIG. 2A and FIG. 3A, and details are not repeated herein.

At step S3203, first information is obtained.

For optional implementations of the step S3203, reference may be made to the optional implementations of the step S2105 in FIG. 2A and the step S3105 in FIG. 3A, and other related parts of the embodiments involved in FIG. 2A and FIG. 3A, and details are not repeated herein.

At step S3204, a first TCI state is determined.

For optional implementations of the step S3204, reference may be made to the optional implementations of the step S2106 in FIG. 2A and the step S3106 in FIG. 3A, and other related parts of the embodiments involved in FIG. 2A and FIG. 3A, and details are not repeated herein.

At step S3205, seventh information is sent.

For optional implementations of the step S3205, reference may be made to the optional implementations of the step S2107 in FIG. 2A and the step S3107 in FIG. 3A, and other related parts of the embodiments involved in FIG. 2A and FIG. 3A, and details are not repeated herein.

At step S3206, fourth information is obtained.

For optional implementations of the step S3206, reference may be made to the optional implementations of the step S2108 in FIG. 2A and the step S3108 in FIG. 3A, and other related parts of the embodiments involved in FIG. 2A and FIG. 3A, and details are not repeated herein.

At step S3207, a second TCI state is determined.

For optional implementations of the step S3207, reference may be made to the optional implementations of the step S2110 in FIG. 2A and the step S3110 in FIG. 3A, and other related parts of the embodiments involved in FIG. 2A and FIG. 3A, and details are not repeated herein.

At step S3208, sixth information is obtained.

For optional implementations of the step S3208, reference may be made to the optional implementations of the step S2112 in FIG. 2A and the step S3112 in FIG. 3A, and other related parts of the embodiments involved in FIG. 2A and FIG. 3A, and details are not repeated herein.

In some embodiments, the above steps are all optional steps.

In some embodiments, the order of the above steps may be interchanged or the above steps may be performed simultaneously.

In some embodiments, the embodiments shown in FIG. 3B may further be combined with any one or more steps in the embodiments shown in FIG. 3A to form a new embodiment.

Thus, the terminal may use the first beam to hand over to the target cell during the handover process, use the second beam to perform signal transmission after handover to the target cell, and activate the TCI state of the target cell based on the indication of the target cell after handover, thus improving handover success rate and communication efficiency.

FIG. 3C is a flowchart illustrating a method for beam indication according to an embodiment of the disclosure. As shown in FIG. 3C, embodiments of the disclosure relate to a method for beam indication, and the method may be performed by a terminal. The method may include the following steps S3301 to S3303.

At step S3301, first information is obtained.

For optional implementations of the step S3301, reference may be made to the optional implementations of the step S2105 in FIG. 2A and the step S3105 in FIG. 3A, and other related parts of the embodiments involved in FIG. 2A and FIG. 3A, and details are not repeated herein.

In some embodiments, the first information is used for triggering the terminal to perform handover to a target cell, and a first network device is a network device corresponding to a current serving cell of the terminal.

At step S3302, a first TCI state is determined.

For optional implementations of the step S3302, reference may be made to the optional implementations of the step S2106 in FIG. 2A and the step S3106 in FIG. 3A, and other related parts of the embodiments involved in FIG. 2A and FIG. 3A, and details are not repeated herein.

In some embodiments, the first TCI state indicates a first beam, and the first beam is a beam used by the terminal during a process of performing handover to the target cell.

At step S3303, a second TCI state is determined.

For optional implementations of the step S3303, reference may be made to the optional implementations of the step S2110 in FIG. 2A and the step S3110 in FIG. 3A, and other related parts of the embodiments involved in FIG. 2A and FIG. 3A, and details are not repeated herein.

In some embodiments, the second TCI state indicates a second beam, the second beam is a beam used by the terminal after handover to the target cell, and the second TCI state is the same as or different from the first TCI state.

In some embodiments, the above steps are all optional steps.

In some embodiments, the order of the above steps may be interchanged or the above steps may be performed simultaneously.

In some embodiments, the embodiments shown in FIG. 3C may further be combined with any one or more steps in the embodiments shown in FIG. 3A to form a new embodiment.

Thus, the terminal may determine the second beam used after handover to the target cell, so that the terminal hands over to the target cell and communicates via the target cell, thus improving handover success rate and communication efficiency.

In some embodiments, the first information includes a first identifier and/or a second identifier, the first identifier is a cell identifier of the target cell, and the second identifier is used to determine the first TCI state.

In some embodiments, the method further includes: receiving second information sent by the first network device, in which the second information includes a first TCI set and parameters of candidate cells preconfigured by the first network device for the terminal, the first TCI set includes TCI states corresponding to the candidate cells, and the candidate cells are cells configured by the first network device for the terminal to perform beam measurement.

In some embodiments, the method further includes: receiving third information sent by the first network device, in which the third information is used for the terminal to activate one or more TCI states corresponding to one or more candidate cells in the first TCI set.

In some embodiments, the first TCI state is one of: at least one TCI state corresponding to the target cell in the first TCI set; or at least one TCI state that is in an active state and corresponds to the target cell in the first TCI set.

In some embodiments, the second TCI state is one of: the first TCI state; or at least one TCI state that is in the active state and corresponds to the target cell in the first TCI set and is different from the first TCI state.

In some embodiments, the method further includes: receiving fourth information sent by a second network device, in which the second network device is a network device corresponding to the target cell, and the fourth information is used to determine that the terminal successfully hands over to the target cell.

In some embodiments, the fourth information is a first scheduled new transmission of the terminal on the target cell; or the fourth information is preset information, and the preset information is transmitted on a PDSCH first scheduled in the target cell.

In some embodiments, the method further includes: receiving fifth information sent by the second network device, in which the fifth information is used to indicate the terminal to deactivate a third TCI state, and the third TCI state is all or a part of TCI states in the first TCI set.

In some embodiments, the TCI state includes a QCL source, and the QCL source includes at least one of: an SSB of a candidate cell; or a CSI-RS of a candidate cell.

In some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments, the method further includes: after determining that the terminal hands over to the target cell, keeping a fourth TCI state in the active state, in which the fourth TCI state includes one of: the first TCI state; a TCI state that is in the active state and corresponds to the target cell in the first TCI set; or a TCI state that is in the active state in the first TCI set.

In some embodiments, the method further includes: receiving sixth information sent by the second network device, in which the sixth information indicates a fifth TCI state, and the fifth TCI state is a TCI state of the target cell.

In some embodiments, the sixth information is used to indicate the terminal to activate the fifth TCI state and deactivate the second TCI state.

In some embodiments, a manner in which the terminal perform handover to the target cell is a handover based on RACH-less.

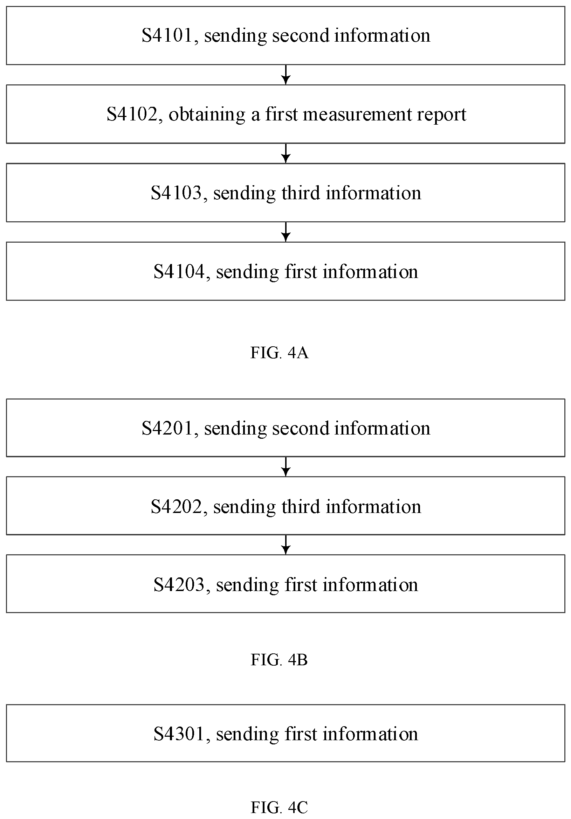

FIG. 4A is a flowchart illustrating a method for beam indication according to an embodiment of the disclosure. As shown in FIG. 4A, embodiments of the disclosure relate to a method for beam indication, and the method may be performed by a first network device. The method includes the following steps S4101 to S4104.

At step S4101, second information is sent.

For optional implementations of the step S4101, reference may be made to the optional implementations of the step S2101 in FIG. 2A and other related parts of the embodiments involved in FIG. 2A, and details are not repeated herein.

In some embodiments, the first network device may send the second information to a terminal, but the disclosure is not limited herein, and the first network device may also send the second information to other entities.

At step S4102, a first measurement report is obtained.

For optional implementations of the step S4102, reference may be made to the optional implementations of the step S2103 in FIG. 2A and other related parts of the embodiments involved in FIG. 2A, and details are not repeated herein.

At step S4103, third information is sent.

For optional implementations of the step S4103, reference may be made to the optional implementations of the step S2104 in FIG. 2A and other related parts of the embodiments involved in FIG. 2A, and details are not repeated herein.

In some embodiments, the first network device may send the third information to a terminal, but the disclosure is not limited herein, and the first network device may also send the third information to other entities.

At step S4104, first information is sent.

For optional implementations of the step S4104, reference may be made to the optional implementations of the step S2105 in FIG. 2A and other related parts of the embodiments involved in FIG. 2A, and details are not repeated herein.

In some embodiments, the first network device may send the first information to a terminal, but the disclosure is not limited herein, and the first network device may also send the first information to other entities.

The method in embodiments of the disclosure may include at least one of steps S4101 to S4104. For example, the step S4104 may be performed as an independent embodiment; the step S4101 may be performed as an independent embodiment; the step S4103 may be performed as an independent embodiment; the step S4103 and the step S4104 may be performed as an independent embodiment; the step S4101 and the step S4104 may be performed as an independent embodiment; the step S4101, the step S4103, and the step S4104 may be performed as an independent embodiment; the step S4101, the step S4102, the step S4103, and the step S4104 may be performed as an independent embodiment, which is not limited herein.

In some embodiments, the order of the steps S4101 to S4104 may be interchanged or the steps may be performed simultaneously.

In some embodiments, the steps S4101 to S4104 are all optional steps.

Thus, the first network device may indicate the terminal to use the first beam during the handover process, and use a second beam to perform signal transmission after handover to the target cell, thus providing a flexible beam indication and control method, and improving handover success rate and communication efficiency.

FIG. 4B is a flow chart illustrating a method for beam indication according to an embodiment of the disclosure. As shown in FIG. 4B, embodiments of the disclosure relate to a method for beam indication, and the method may be performed by a first network device. The method may include the following steps S4201 to S4203.

At step S4201, second information is sent.

For optional implementations of the step S4201, reference may be made to the optional implementations of the step S2101 in FIG. 2A and the step S4101 in FIG. 4A, and other related parts of the embodiments involved in FIG. 2A and FIG. 4A, and details are not repeated herein.

At step S4202, third information is sent.

For optional implementations of the step S4202, reference may be made to the optional implementations of the step S2103 in FIG. 2A and the step S4103 in FIG. 4A, and other related parts of the embodiments involved in FIG. 2A and FIG. 4A, and details are not repeated herein.

At step S4203, first information is sent.

For optional implementations of the step S4203, reference may be made to the optional implementations of the step S2105 in FIG. 2A and the step S4104 in FIG. 4A, and other related parts of the embodiments involved in FIG. 2A and FIG. 4A, and details are not repeated herein.

In some embodiments, the above steps are all optional steps.

In some embodiments, the order of the above steps may be interchanged or the steps may be performed simultaneously.

In some embodiments, the embodiments shown in FIG. 4B may further be combined with any one or more steps in the embodiments shown in FIG. 4A to form a new embodiment.

Thus, the first network device may indicate the terminal to use the first beam during the handover process, and use a second beam to perform signal transmission after handover to the target cell, thus providing a flexible beam indication and control method, and improving handover success rate and communication efficiency.

FIG. 4C is a flowchart illustrating a method for beam indication according to an embodiment of the disclosure. As shown in FIG. 4C, embodiments of the disclosure relate to a method for beam indication, and the method may be performed by a first network device. The method may include the following step S4301.

At step S4301, first information is sent.

For optional implementations of the step S4301, reference may be made to the optional implementations of the step S2105 in FIG. 2A and the step S4104 in FIG. 4A, and other related parts of the embodiments involved in FIG. 2A and FIG. 4A, and details are not repeated herein.

In some embodiments, the embodiments shown in FIG. 4C may further be combined with any one or more steps in the embodiments shown in FIG. 4A to form a new embodiment.

In some embodiments, the first information is used for triggering the terminal to perform handover to a target cell, and the first network device is a network device corresponding to a current serving cell of the terminal.

Thus, the first network device may indicate the terminal to determine a second beam used after handover to the target cell, so that the terminal hands over to the target cell and communicates via the target cell, thus improving handover success rate and communication efficiency.

In some embodiments, the first information includes a first identifier and/or a second identifier, the first identifier is a cell identifier of the target cell, and the second identifier is used to determine a first TCI state, in which the first TCI state indicates a first beam, and the first beam is a beam used by the terminal during a process of performing handover to the target cell.

In some embodiments, the method further includes: sending second information to the terminal, in which the second information includes a first TCI set and parameters of candidate cells preconfigured by the first network device for the terminal, the first TCI set includes TCI states corresponding to the candidate cells, and the candidate cells are cells configured by the first network device for the terminal to perform beam measurement.

In some embodiments, the method further includes: sending third information to the terminal, in which the third information is used for the terminal to activate one or more TCI states corresponding to one or more candidate cells in the first TCI set.

In some embodiments, the first TCI state is one of: at least one TCI state corresponding to the target cell in the first TCI set; or at least one TCI state that is in an active state and corresponds to the target cell in the first TCI set.

In some embodiments, a second TCI state is used for the terminal to determine a second beam, the second beam is a beam used by the terminal after handover to the target cell, and the second TCI state is one of: the first TCI state; or at least one TCI state that is in the active state and corresponds to the target cell in the first TCI set and is different from the first TCI state.

In some embodiments, the TCI state includes a QCL source, and the QCL source includes at least one of: an SSB of a candidate cell; or a CSI-RS of a candidate cell.

In some embodiments, the first TCI set is a union of second TCI sets of respective candidate cells, and the second TCI set is a TCI set of a candidate cell; or the first TCI set includes at least one TCI identifier, and one TCI identifier corresponds to one TCI state in the second TCI set.

In some embodiments, a manner in which the terminal performs handover to the target cell is a handover based on RACH-less.

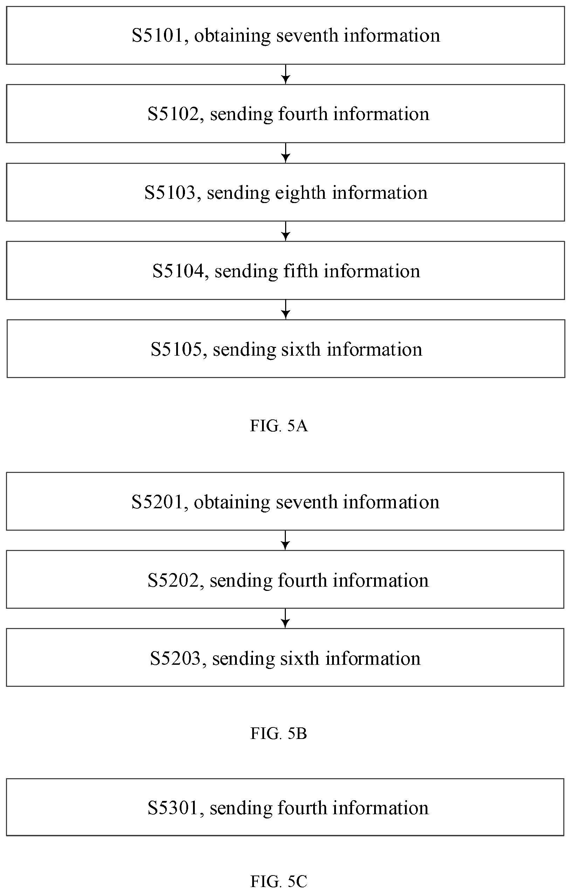

FIG. 5A is a flowchart illustrating a method for beam indication according to an embodiment of the disclosure. As shown in FIG. 5A, embodiments of the disclosure relate to a method for beam indication, and the method may be performed by a second network device. The method includes the following steps S5101 to S5105.

At step S5101, seventh information is obtained.

For optional implementations of the step S5101, reference may be made to the optional implementations of the step S2107 in FIG. 2A and other related parts of the embodiments involved in FIG. 2A, and details are not repeated herein.

At step S5102, fourth information is sent.

For optional implementations of the step S5102, reference may be made to the optional implementations of the step S2108 in FIG. 2A and other related parts of the embodiments involved in FIG. 2A, and details are not repeated herein.

In some embodiments, the second network device may send the fourth information to a terminal, but the disclosure is not limited herein, and the second network device may also send the fourth information to other entities.

At step S5103, eighth information is sent.

For optional implementations of the step S5103, reference may be made to the optional implementations of the step S2109 in FIG. 2A and other related parts of the embodiments involved in FIG. 2A, and details are not repeated herein.

In some embodiments, the second network device may send the eighth information to the terminal, but the disclosure is not limited herein, and the second network device may also send the eighth information to other entities.

At step S5104, fifth information is sent.

For optional implementations of the step S5104, reference may be made to the optional implementations of the step S2111 in FIG. 2A and other related parts of the embodiments involved in FIG. 2A, and details are not repeated herein.

In some embodiments, the second network device may send the fifth information to the terminal, but the disclosure is not limited herein, and the second network device may also send the fifth information to other entities.

At step S5105, sixth information is sent.

For optional implementations of the step S5105, reference may be made to the optional implementations of the step S2112 in FIG. 2A and other related parts of the embodiments involved in FIG. 2A, and details are not repeated herein.

In some embodiments, the second network device may send the sixth information to the terminal, but the disclosure is not limited herein, and the second network device may also send the sixth information to other entities.

The method in embodiments of the disclosure may include at least one of steps S5101 to S5105. For example, the step S5102 may be performed as an independent embodiment; the step S5104 may be performed as an independent embodiment; the step S5105 may be performed as an independent embodiment; the step S5101 and the step S5102 may be performed as an independent embodiment; the step S5102 and the step S5105 may be performed as an independent embodiment; the step S5101, the step S5102, and the step S5104 may be performed as an independent embodiment; the step S5101, the step S5102, and the step S5105 may be performed as an independent embodiment, which is not limited herein.

In some embodiments, the order of the steps S5101 to S5105 may be interchanged or the steps may be performed simultaneously.

In some embodiments, the steps S5101 to S5105 are all optional steps.

Thus, the second network device may indicate that the terminal successfully hands over to the target cell, provide signal transmission for the terminal via the second beam, and indicate the terminal to deactivate or activate the TCI state after handover, thus providing a flexible beam indication and control method, and improving handover success rate and communication efficiency.

FIG. 5B is a flowchart illustrating a method for beam indication according to an embodiment of the disclosure. As shown in FIG. 5B, embodiments of the disclosure relate to a method for beam indication, and the method may be performed by a second network device. The method may include the following steps S5201 to S5203.

At step S5201, seventh information is obtained.

For optional implementations of the step S5201, reference may be made to the optional implementations of the step S2107 in FIG. 2A and the step S5101 in FIG. 5A, and other related parts of the embodiments involved in FIG. 2A and FIG. 5A, and details are not repeated herein.

At step S5202, fourth information is sent.

For optional implementations of the step S5202, reference may be made to the optional implementations of the step S2108 in FIG. 2A and the step S5102 in FIG. 5A, and other related parts of the embodiments involved in FIG. 2A and FIG. 5A, and details are not repeated herein.

At step S5203, sixth information is sent.

For optional implementations of the step S5203, reference may be made to the optional implementations of the step S2112 in FIG. 2A and the step S5105 in FIG. 5A, and other related parts of the embodiments involved in FIG. 2A and FIG. 5A, and details are not repeated herein.

In some embodiments, the above steps are all optional steps.

In some embodiments, the order of the above steps may be interchanged or the steps may be performed simultaneously.

In some embodiments, the embodiments shown in FIG. 5B may further be combined with any one or more steps in the embodiments shown in FIG. 5A to form a new embodiment.

Thus, the second network device may indicate to the terminal that handover to the target cell is successful, provide signal transmission for the terminal via the second beam, and indicate the terminal to activate the TCI state after handover, thus providing a flexible beam indication and control method, and improving handover success rate and communication efficiency.

FIG. 5C is a flowchart illustrating a method for beam indication according to an embodiment of the disclosure. As shown in FIG. 5C, embodiments of the disclosure relate to a method for beam indication, and the method may be performed by a second network device. The method may include the following step S5301.

At step S5301, fourth information is sent.

For optional implementations of the step S5301, reference may be made to the optional implementations of the step S2108 in FIG. 2A and the step S5102 in FIG. 5A, and other related parts of the embodiments involved in FIG. 2A and FIG. 5A, and details are not repeated herein.

In some embodiments, the embodiments shown in FIG. 5C may further be combined with any one or more steps in the embodiments shown in FIG. 5A to form a new embodiment.

In some embodiments, the fourth information is used to determine that the terminal successfully hands over to a target cell, and the second network device is a network device corresponding to the target cell.

Thus, the second network device may indicate that the terminal successfully hands over to the target cell, thus improving handover success rate and communication efficiency.

In some embodiments, the fourth information is a first scheduled new transmission of the terminal on the target cell; or the fourth information is preset information, and the preset information is transmitted on a PDSCH first scheduled in the target cell.

In some embodiments, the method further includes: sending fifth information to the terminal, in which the fifth information is used to indicate the terminal to deactivate a third TCI state, and the third TCI state is all or a part of TCI states in a first TCI set, the first TCI set includes TCI states corresponding to candidate cells, and the candidate cells are cells configured by a first network device for the terminal to perform beam measurement.

In some embodiments, the TCI state includes a QCL source, and the QCL source includes at least one of: an SSB of a candidate cell; or a CSI-RS of a candidate cell.

In some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments, the method further includes: sending sixth information to the terminal, in which the sixth information indicates a fifth TCI state, and the fifth TCI state is a TCI state of the target cell.

In some embodiments, the sixth information is used to indicate the terminal to activate the fifth TCI state and deactivate the second TCI state.

In some embodiments, a manner in which the terminal performs handover to the target cell is a handover based on RACH-less.

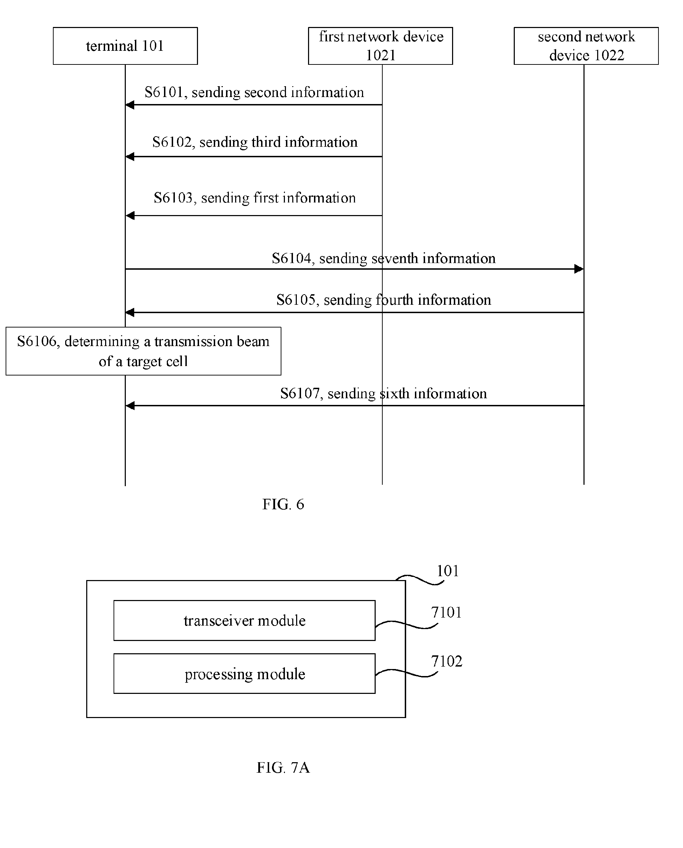

FIG. 6 is a flowchart illustrating a method for beam indication according to an embodiment of the disclosure. As shown in FIG. 6, embodiments of the disclosure relate to a method for beam indication, and the method may be performed by a communication system. The method may include the following steps S6101 to S6105.

At step S6101, a first network device sends second information to a terminal.

In some embodiments, the terminal may receive the second information.

In some embodiments, the first network device may be a network device corresponding to a serving cell of the terminal.

In some embodiments, the second information may be used to preconfigure, for the terminal, a second parameter used for handover, and the second parameter may include at least one of: RRC parameters of at least one candidate cell; TCI states for beam indication during a handover process; a first TCI set, in which the first TCI set may also be referred to as an LTM TCI state pool.

In some embodiments, the second information may be used to preconfigure, for the terminal, RRC parameters of respective candidate cells and TCI states for beam indication during a handover process.

In some embodiments of the disclosure, the first TCI set may have different forms.

In some embodiments, the first TCI set is designed independently (not associated) from a TCI set (second TCI set) of each candidate cell.

In an implementation, a QCL source in the first TCI set is an SSB used for performing beam measurement.

In another implementation, a QCL in the first TCI set is a TRS, information of the TRS may be independently configured, and a QCL source of the TRS is an SSB measured by L1. Optionally, the information of the TRS may be included in the second information.

In other embodiments, the first TCI set is associated (not independently designed) with a TCI set (second TCI set) of each candidate cell.

In an implementation, the first TCI set is an independent set, but a TCI state configuration in the first TCI set is exactly the same as a TCI state of the candidate cell.

In another implementation, the first TCI set may only include an identifier list (ID list) of TCI states configured under respective candidate cells.

At step S6102, the first network device sends third information to the terminal.

In some embodiments, the terminal may receive the third information.

In some embodiments, the third information may activate one or more TCI states in the first TCI set for the terminal.

In some embodiments, the third information may activate one or more TCI states of candidate cells for the terminal.

At step S6103, the first network device sends first information to the terminal.

In some embodiments, the first information may be used to trigger a user to hand over to a target cell, and indicate a transmission beam of the target cell.

In some embodiments, the first information may at least include a first identifier and a second identifier, the first identifier may be a cell identifier of the target cell, and the second identifier may be a TCI state identifier.

At step S6104, the terminal sends seventh information to a second network device.

In some embodiments, the second network device may receive the seventh information.

In some embodiments, the seventh information may indicate that the terminal accesses the second network device.

In some embodiments, the seventh information may be first UL data.

In some embodiments, the terminal may send the seventh information via a first beam.

At step S6105, the second network device sends fourth information to the terminal.

In some embodiments, the terminal may receive the fourth information sent by the second network device, determine that the terminal successfully accesses the target cell, and complete handover.

In some embodiments, the fourth information is a first scheduled new transmission (new transmission resource PUSCH/PDSCH).

In some embodiments, the fourth information is a specific message specified by a protocol, and is transmitted on a PDSCH first scheduled in the target cell.

In some embodiments, the fourth information is a PDCCH scheduling a new transmission.

At step S6106, the terminal determines a transmission beam of the target cell.

In some embodiments, the terminal may determine the transmission beam of the target cell after handover is completed. Optionally, the transmission beam of the target cell may also be referred to as a first beam.

In some embodiments, the terminal may determine an activated first TCI state, and determine the transmission beam (that is, the first beam) of the target cell based on the activated first TCI state.

In some embodiments, based on different forms of the first TCI set (LTM TCI state), different manners may be used to determine the activated first TCI state.

In some embodiments, the first TCI set is independently designed, and a source reference signal is an SSB.

For example, the first TCI set is designed independently (not associated) from a TCI set (second TCI set) of each candidate cell, and a QCL source in the first TCI set is an SSB used for performing beam measurement.

In an optional implementation, after handover is completed, by default, all activated LTM TCI states, other than the TCI state indicated by handover signaling, are deactivated. Before the target cell indicates a TCI state under configuration of the target cell, a beam indicated in the first information may be always used.

A manner of indication by the target cell may be activating one TCI state via a MAC CE, or indicating via DCI after activating a plurality of TCI states via a MAC CE.

In another optional implementation, the terminal may retain all activated LTM TCI states (that is, retain LTM TCI states activated before cell handover), so as to support subsequent LTM.

Optionally, an explicit deactivation signaling may be introduced to deactivate the LTM TCI states. Thus, it may be avoided that the terminal needs to always maintain all activated LTM TCI states, and by deactivating a part or all of the LTM TCI states, power consumption of the terminal may be reduced.

Optionally, before the target cell indicates a TCI state of the target cell, LTM TCI states may continue to be used for subsequent beam indication, but an identifier needs to be introduced for distinction.

In other embodiments, the first TCI set is independently designed, and a source reference signal is a TRS.

In an optional implementation, after handover is completed, among activated LTM TCI states, all TCI states other than the TCI state indicated by the handover signaling are deactivated. Before the target cell indicates a TCI state under configuration of the target cell, a beam indicated in the handover signaling may be always used.

In another optional implementation, LTM TCI states of other candidate cells are all deactivated, but LTM TCI states of the target cell are maintained activated.

Optionally, before the target cell activates a TCI state of the target cell, maintained activated LTM TCI states may continue to be used for subsequent beam indication. Optionally, this may be limited to the activated LTM TCI states.

Optionally, an identifier may be introduced in activation information/indication signaling, and the identifier is used to distinguish whether what is activated/indicated is an LTM TCI state or a TCI state of the target cell.

In another optional implementation, the terminal may retain all activated LTM TCI states, so as to support subsequent LTM, and in this case, explicit deactivation signaling may be defined.

Optionally, the target cell may indicate a TCI state of the target cell, and before the indication, the terminal uses the beam indicated by the handover signaling.

Optionally, before the target cell indicates a TCI state of the target cell, LTM TCI states may be allowed to continue to be used for subsequent beam indication, but an identifier needs to be introduced for distinction.

In other embodiments, TCI states in the first TCI set are associated with TCI states of the candidate cells, the first TCI set may be an independent set, but the TCI state configuration in the first TCI set is exactly the same as the TCI state of the candidate cell.

Optionally, for a manner of determining the beam, a source reference signal SSB of a CSI-RS in the indicated TCI state may be used. Optionally, in order to avoid that the serving cell needs to process CSI-RS configuration information of each candidate cell, a configuration of a CSI-RS serving as a QCL source may also be placed outside the configuration of each candidate cell, for example, may be placed in the second information used for configuring the first TCI set.

In an optional implementation, the TCI state configuration in the first TCI set is exactly the same as the TCI state of the candidate cell, it may be considered that the LTM TCI states of the target cell are kept activated after handover is completed, and it may be considered that TCI states under the configuration of the target cell are also activated. The activated TCI states may be directly indicated, and it is assumed by default that the TCI states indicated for reactivation in subsequent signaling are all TCI states of the target cell.

In another optional implementation, all activated LTM TCI states may be retained, so as to support subsequent LTM, and explicit deactivation signaling may also be introduced. It may also be considered that TCI states under the configuration of the target cell are also activated, and subsequently, the target cell may directly indicate these activated TCI states.

In yet other embodiments, the first TCI set only includes an identifier list (ID list) of TCI states configured under respective candidate cells.

The serving cell needs to process RRC parameters of respective candidate cells in advance, to obtain configurations of TCI states and CSI-RS, thus performing beam indication.

Optionally, an actual LTM TCI state may not exist, and beams during handover and after handover are actually all TCI states of the target cell.

It should be noted that the step S6106 may be performed after any one of the steps S6101 to S6105.

At step S6107, the second network device sends sixth information to the terminal.

In some embodiments, the terminal may receive the sixth information sent by the second network device.

In some embodiments, the sixth information may indicate a TCI state of the target cell, and the TCI state is different from the LTM TCI state, but is a TCI state under RRC parameters of the user.

In some embodiments, the sixth information is a MAC CE.

In other embodiments, the sixth information is DCI.

In some embodiments of the disclosure, the first TCI set may be an LTM TCI state pool, and any one of the following beam indication manners may be designed based on the LTM TCI state pool_{∘}

In manner I: the LTM TCI state pool and a TCI state pool of each candidate cell are independently designed.

The manner I may include the following example I and example II.

In example I: a QCL source in the LTM TCI state is an SSB used for performing beam measurement. In this case, the LTM TCI state may only be used for a handover process. After handover is completed, the TCI state of the target cell needs to be used for beam indication.

Optionally, after handover is completed, by default, all activated LTM TCI states, other than the TCI state indicated by the handover signaling, are deactivated.

Before the target cell indicates a TCI state under configuration of the target cell, the beam indicated in the handover signaling is always used. The indication here is activating a TCI state via a MAC CE, or after a plurality of TCI states are activated via a MAC CE, indication performed via DCI.

Optionally, all LTM TCI states activated before a cell handover are retained, so as to support subsequent LTM.

In this case, deactivation signaling is introduced to deactivate the LTM TCI states, otherwise the user needs to maintain all activated LTM TCI states.

Before the target cell indicates a TCI state of the target cell, the beam indicated by the handover signaling is always used.

In example II: a QCL in an LTM TCI state is a TRS, information of the TRS is independently configured, and a QCL source of the TRS is an SSB measured by L1. The TRS may be a CSI-RS.

A transmission beam may be determined as the same beam as a source reference signal SSB of the TRS in the TCI state.

Beam indication after handover may include a plurality of manners.

For example, after handover is completed, among activated LTM TCI states, all TCI states other than the TCI state indicated by the handover signaling are deactivated. Before the target cell indicates a TCI state under configuration of the target cell, the beam indicated in the handover signaling is always used.

For another example, all LTM TCI states of other candidate cells are deactivated, but the LTM TCI states of the target cell are maintained activated. Optionally, before the target cell activates a TCI state of the target cell, the LTM TCI states may continue to be used for subsequent beam indication. Optionally, it may be specified that this is limited to the activated LTM TCI states. An identifier is introduced in activation information/indication signaling to distinguish whether what is activated/indicated is an LTM TCI state or a TCI state of the target cell.

For another example, all activated LTM TCI states are retained, so as to support subsequent LTM. In this case, explicit deactivation signaling is needed (different from case 2 of option 1, the TCI herein may be used for transmission, while the TCI in case 2 of option 1 may only be used for measurement). Optionally, it may be specified that the target cell must indicate a TCI state of the target cell, and before the indication, the beam indicated by the handover signaling is used, or, before the target cell indicates a TCI state of the target cell, the LTM TCI states are allowed to continue to be used for subsequent beam indication, but an identifier needs to be introduced for distinction.

In manner II: TCI states in the LTM TCI state pool are associated with TCI states of candidate cells.

The manner II may include the following example III and example IV.

In example III: an independent pool, but a TCI state configuration in the pool is exactly the same as a TCI state of a candidate cell.

Optionally, a transmission beam may be determined as a source reference signal SSB of a CSI-RS in the indicated TCI state. In order to avoid that a serving cell needs to process CSI-RS configuration information of each candidate cell, a configuration of a CSI-RS serving as a QCL source may also be placed outside the configuration of each candidate cell.

Beam indication after handover may include a plurality of manners.

For example, since the TCI state configuration in the pool is exactly the same as the TCI state of the candidate cell, it may be considered that activated LTM TCI states of the target cell are retained after handover is completed, and it may be considered that TCI states under the configuration of the target cell are also activated. The activated TCI states may be directly indicated, and it is assumed by default that the TCI states indicated for reactivation in subsequent signaling are all TCI states of the target cell.

For another example, all activated LTM TCI states are retained, so as to support subsequent LTM, and explicit deactivation signaling is also needed. It may also be considered that TCI states under the configuration of the target cell are also activated, and subsequently, the target cell may directly indicate these activated TCI states.

In example IV: the LTM TCI state pool only includes an ID list of TCI states configured under respective candidate cells.

The serving cell needs to process RRC parameters of each candidate cell in advance, to obtain configurations of TCI states and CSI-RS, thus performing beam indication.

In this case, an actual LTM TCI state does not exist, and beams during handover and after handover are actually all TCI states of the target cell.

Thus, via the above method for beam indication, the transmission beam of the target cell may be indicated to the terminal during the handover process, so that the terminal successfully hands over to the target cell and is provided with data service by the target cell.

In some embodiments of the disclosure, a communication system is provided. The communication system may include a terminal, configured to perform the method for beam indication performed by the terminal in the above embodiments of the disclosure; a first network device, configured to perform the method for beam indication performed by the first network device in the above embodiments of the disclosure; and a second network device, configured to perform the method for beam indication performed by the second network device in the above embodiments of the disclosure.

Embodiments of the disclosure also provide an apparatus for implementing any one of the above methods. For example, an apparatus is provided, including units or modules for performing the steps executed by the terminal in any one of the above methods. For example, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of part of or all units or modules may be implemented by designing the hardware circuit. The hardware circuit may be understood as one or more processors. For example, in an implementation, the hardware circuit is an application specific integrated circuit (ASIC). The functions of part of or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connections between the logic gate circuits are configured via profiles to implement the functions of part of or all units or modules. All units or modules of the above apparatus may be fully implemented in the form of software called by the processor, or fully implemented in the form of the hardware circuit, or partially implemented in the form of software called by the processor and remaining part implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuits is fixed or reconstructed, for example, the processor is a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of part of or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a terminal according to an embodiment of the disclosure. As shown in FIG. 7A, the terminal 101 may include at least one of: a transceiver module 7101, a processing module 7102, and the like. In some embodiments, the transceiver module 7101 is configured to receive first information sent by a first network device, in which the first information is used for triggering the terminal to perform handover to a target cell, and the first network device is a network device corresponding to a current serving cell of the terminal; and the processing module 7102 is configured to determine, based on the first information, a first TCI state, in which the first TCI state indicates a first beam, and the first beam is a beam used by the terminal during a process of performing handover to the target cell; and determine a second TCI state, in which the second TCI state indicates a second beam, the second beam is a beam used by the terminal after handover to the target cell, and the second TCI state is the same as or different from the first TCI state.

In some embodiments, the first information includes a first identifier and/or a second identifier, the first identifier is a cell identifier of the target cell, and the second identifier is used to determine the first TCI state.

In some embodiments, the transceiver module 7101 is further configured to receive second information sent by the first network device, in which the second information includes a first TCI set and parameters of candidate cells preconfigured by the first network device for the terminal, the first TCI set includes TCI states corresponding to the candidate cells, and the candidate cells are cells configured by the first network device for the terminal to perform beam measurement.

In some embodiments, the transceiver module 7101 is further configured to receive third information sent by the first network device, in which the third information is used for the terminal to activate one or more TCI states corresponding to one or more candidate cells in the first TCI set.

In some embodiments, the first TCI state is one of: at least one TCI state corresponding to the target cell in the first TCI set; or at least one TCI state that is in an active state and corresponds to the target cell in the first TCI set.

In some embodiments, the second TCI state is one of: the first TCI state; or at least one TCI state that is in the active state and corresponds to the target cell in the first TCI set and is different from the first TCI state.

In some embodiments, the transceiver module 7101 is further configured to receive fourth information sent by a second network device, in which the second network device is a network device corresponding to the target cell, and the fourth information is used to determine that the terminal successfully hands over to the target cell.

In some embodiments, the fourth information is a first scheduled new transmission of the terminal on the target cell; or the fourth information is preset information, and the preset information is transmitted on a PDSCH first scheduled in the target cell.

In some embodiments, the transceiver module 7101 is further configured to receive fifth information sent by the second network device, in which the fifth information is used to indicate the terminal to deactivate a third TCI state, and the third TCI state is all or a part of TCI states in the first TCI set.

In some embodiments, the TCI state includes a QCL source, and the QCL source includes at least one of: an SSB of a candidate cell; or a CSI-RS of a candidate cell.

In some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments, the processing module 7102 is further configured to, after determining that the terminal hands over to the target cell, keep a fourth TCI state in the active state, in which the fourth TCI state includes one of: the first TCI state; a TCI state that is in the active state and corresponds to the target cell in the first TCI set; or a TCI state that is in the active state in the first TCI set.

In some embodiments, the transceiver module 7101 is further configured to receive sixth information sent by the second network device, in which the sixth information indicates a fifth TCI state, and the fifth TCI state is a TCI state of the target cell.

In some embodiments, the sixth information is used to indicate the terminal to activate the fifth TCI state and deactivate the second TCI state.

In some embodiments, a manner in which the terminal performs handover to the target cell is a handover based on RACH-less.

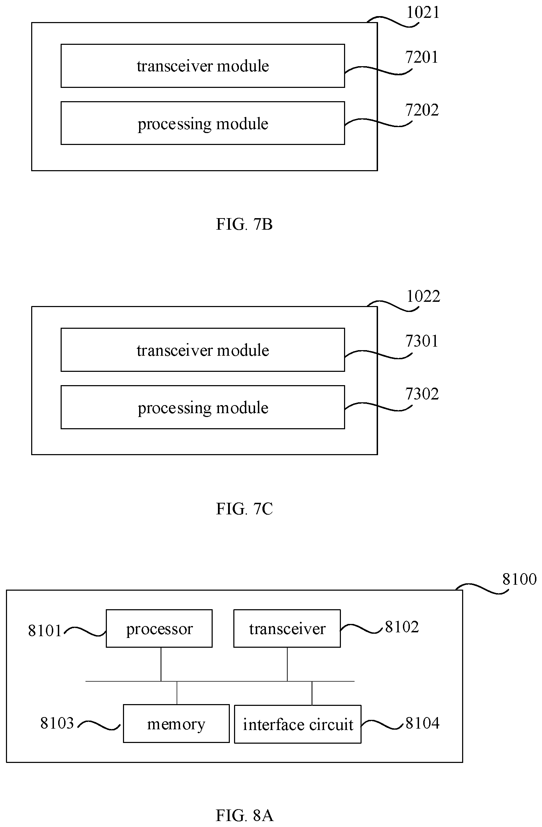

FIG. 7B is a block diagram illustrating a first network device according to an embodiment of the disclosure. As shown in FIG. 7B, the first network device 1021 may include at least one of: a transceiver module 7201, a processing module 7202, and the like. In some embodiments, the transceiver module 7201 is configured to send first information to a terminal, in which the first information is used for triggering the terminal to perform handover to a target cell, and the first network device is a network device corresponding to a current serving cell of the terminal.

In some embodiments, the first information includes a first identifier and/or a second identifier, the first identifier is a cell identifier of the target cell, and the second identifier is used to determine a first TCI state, in which the first TCI state indicates a first beam, and the first beam is a beam used by the terminal during a process of performing handover to the target cell.

In some embodiments, the transceiver module 7201 is configured to send second information to the terminal, in which the second information includes a first TCI set and parameters of candidate cells preconfigured by the first network device for the terminal, the first TCI set includes TCI states corresponding to the candidate cells, and the candidate cells are cells configured by the first network device for the terminal to perform beam measurement.

In some embodiments, the transceiver module 7201 is configured to send third information to the terminal, in which the third information is used for the terminal to activate one or more TCI states corresponding to one or more candidate cells in the first TCI set.

In some embodiments, the first TCI state is one of: at least one TCI state corresponding to the target cell in the first TCI set; or at least one TCI state that is in an active state and corresponds to the target cell in the first TCI set.

In some embodiments, a second TCI state is used for the terminal to determine a second beam, the second beam is a beam used by the terminal after handover to the target cell, and the second TCI state is one of: the first TCI state; or at least one TCI state that is in the active state and corresponds to the target cell in the first TCI set and is different from the first TCI state.

In some embodiments, the TCI state includes a QCL source, and the QCL source includes at least one of: an SSB of a candidate cell; or a CSI-RS of a candidate cell.

In some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments, a manner in which the terminal performs handover to the target cell is a handover based on RACH-less.

FIG. 7C is a block diagram illustrating a second network device according to an embodiment of the disclosure. As shown in FIG. 7C, the second network device 1022 may include at least one of: a transceiver module 7301, a processing module 7302, and the like. In some embodiments, the transceiver module 7301 is configured to send fourth information to a terminal, in which the fourth information is used to determine that the terminal successfully hands over to a target cell, and the second network device is a network device corresponding to the target cell.

In some embodiments, the fourth information is a first scheduled new transmission of the terminal on the target cell; or the fourth information is preset information, and the preset information is transmitted on a PDSCH first scheduled in the target cell.

In some embodiments, the transceiver module 7301 is configured to send fifth information to the terminal, in which the fifth information is used to indicate the terminal to deactivate a third TCI state, and the third TCI state is all or a part of TCI states in a first TCI set, the first TCI set includes TCI states corresponding to candidate cells, and the candidate cells are cells configured by a first network device for the terminal to perform beam measurement.

In some embodiments, the TCI state includes a QCL source, and the QCL source includes at least one of: an SSB of a candidate cell; or a CSI-RS of a candidate cell.

In some embodiments, the first TCI set is a union of second TCI sets of respective candidate cells, and a second TCI set is a TCI set of a candidate cell; or the first TCI set includes at least one TCI identifier, and one TCI identifier corresponds to one TCI state in the second TCI set.

In some embodiments, the transceiver module 7301 is configured to send sixth information to the terminal, in which the sixth information indicates a fifth TCI state, and the fifth TCI state is a TCI state of the target cell.

In some embodiments, the sixth information is used to indicate the terminal to activate the fifth TCI state and deactivate the second TCI state.

In some embodiments, a manner in which the terminal performs handover to the target cell is a handover based on RACH-less.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

FIG. 8A is a block diagram illustrating a communication device 8100 according to an embodiment of the disclosure. The communication device 8100 may be a network device (such as an access network device, a core network device, a first network device, a second network device, etc.), or a terminal (such as a UE, etc.), or a chip, a chip system, a processor, etc. that supports a network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 8A, the communication device 8100 may include one or more processors 8101. The processor 8101 may be a general-purpose processor or a special-purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. Optionally, the communication device 8100 is configured to execute any one of the above methods. Optionally, the one or more processors 8101 are configured to call instructions to cause the communication device 8100 to perform any of the above methods.

In some embodiments, the communication device 8100 further includes one or more transceivers 8102. When the communication device 8100 includes one or more transceivers 8102, the transceiver 8102 performs at least one of the communication steps such as sending and/or receiving (e.g., S2101, S2103, S2104, S2105, S2107, S2108, S2111, S2112, but is not limited herein) in the above method, and the processor 8101 performs at least one of other steps (e.g., S2102, S2106, S2110, but is not limited herein).

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more memories 8103 for storing data. Optionally, all or some of the memories 8103 may also be located outside the communication device 8100. In optional embodiments, the communication device 8100 further includes one or more interface circuits 8104. Optionally, an interface circuit 8104 is connected to a memory 8103. The interface circuit 8104 may be configured to receive data from the memory 8103 or other devices, and may be configured to send data to the memory 8103 or other devices. For example, the interface circuit 8104 may read data stored in the memory 8103 and send the data to the processor 8101.

The communication device 8100 in the above embodiments may be a network device or a terminal, but a scope of the communication device 8100 in the disclosure is not limited to this, and a structure of the communication device 8100 may not be limited by FIG. 8A. The communication device may be an independent device or a part of a larger device. For example, the communication device may be: 1) an independent IC, or a chip, or a chip system or a subsystem; 2) a collection including one or more IC, optionally, the IC collection may further include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

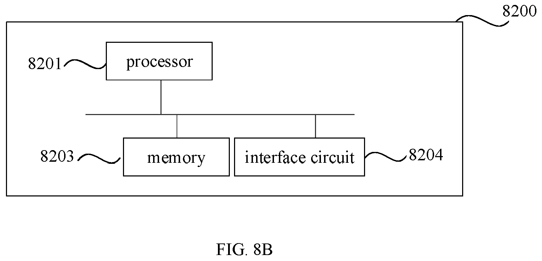

FIG. 8B is a block diagram illustrating a chip 8200 according to an embodiment of the disclosure. For a case where the communication device 8100 may be a chip or a chip system, reference may be made to the block diagram of the chip 8200 shown in FIG. 8B, but not limited to this.

The chip 8200 includes one or more processors 8201. The chip 8200 is configured to execute any one of the above methods.

In some embodiments, the chip 8200 further includes one or more interface circuits 8204. Optionally, the terms such as interface circuit, interface, transceiver pin, transceiver, etc. may be used interchangeably. In some embodiments, the chip 8200 further includes one or more memories 8203 for storing data. Optionally, all or some of the memories 8203 may be located outside the chip 8200.

Optionally, an interface circuit 8204 is connected to a memory 8203. The interface circuit 8204 may be configured to receive data from the memory 8203 or other apparatuses, and may be configured to send data to the memory 8203 or other apparatuses. For example, the interface circuit 8204 can read data stored in the memory 8203 and send the data to the processor 8201.

In some embodiments, the interface circuit 8204 performs at least one of the communication steps such as sending and/or receiving (e.g., S2101, S2103, S2104, S2105, S2107, S2108, S2111, S2112, but is not limited herein) in the above method. The interface circuit 8204 performing communication steps such as sending and/or receiving in the above method means, for example: the interface circuit 8204 performs data interaction between the processor 8201, the chip 8200, the memory 8203, or a transceiver device. In some embodiments, the processor 8201 performs at least one of other steps (e.g., S2102, S2106, S2110, but is not limited herein).

In various embodiments of virtual devices, physical devices, chips, and the like, the modules and/or components described may be arbitrarily combined or separated as required. Optionally, some or all steps may further be executed collaboratively by multiple modules and/or components, which is not limited herein.

The disclosure further provides a storage medium for storing instructions.

When the instructions are running on the communication device 8100, the communication device 8100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may further be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the program product is run on a computer, the computer is caused to implement any one of the above methods.

## Claims

1. A method for beam indication, performed by a terminal, comprising:
receiving first information sent by a first network device, wherein the first information is used for triggering the terminal to perform handover to a target cell, and the first network device is a network device corresponding to a current serving cell of the terminal;
determining, based on the first information, a first transmission configuration indication (TCI) state, wherein the first TCI state indicates a first beam, and the first beam is a beam used by the terminal during a process of performing handover to the target cell; and
determining a second TCI state, wherein the second TCI state indicates a second beam, the second beam is a beam used by the terminal after handover to the target cell, and the second TCI state is the same as or different from the first TCI state.

2. The method according to claim 1, wherein the first information comprises a first identifier and/or a second identifier, the first identifier is a cell identifier of the target cell, and the second identifier is used to determine the first TCI state.

3. The method according to claim 1 or 2, further comprising:
receiving second information sent by the first network device, wherein the second information comprises a first TCI set and parameters of candidate cells preconfigured by the first network device for the terminal, the first TCI set comprises TCI states corresponding to the candidate cells, and the candidate cells are cells configured by the first network device for the terminal to perform beam measurement.

4. The method according to claim 3, further comprising:
receiving third information sent by the first network device, wherein the third information is used for the terminal to activate one or more TCI states corresponding to one or more candidate cells in the first TCI set.

5. The method according to claim 3 or 4, wherein the first TCI state is one of:
at least one TCI state corresponding to the target cell in the first TCI set; or
at least one TCI state that is in an activated state and corresponds to the target cell in the first TCI set.

6. The method according to any one of claims 3 to 5, wherein the second TCI state is one of:
the first TCI state; or
at least one TCI state that is in an activated state and corresponds to the target cell in the first TCI set and is different from the first TCI state.

7. The method according to any one of claims 3 to 6, further comprising:
receiving fourth information sent by a second network device, wherein the second network device is a network device corresponding to the target cell, and the fourth information is used to determine that the terminal successfully hands over to the target cell.

8. The method according to claim 7, wherein
the fourth information is a first scheduled new transmission of the terminal on the target cell; or
the fourth information is preset information, and the preset information is transmitted on a physical downlink shared channel (PDSCH) first scheduled in the target cell.

9. The method according to any one of claims 3 to 8, further comprising:
receiving fifth information sent by the second network device, wherein the fifth information is used to indicate the terminal to deactivate a third TCI state, and the third TCI state is all or a part of TCI states in the first TCI set.

10. The method according to any one of claims 3 to 9, wherein the TCI state comprises a quasi co-location (QCL) source, and the QCL source comprises at least one of:
a synchronization signal block (SSB) of a candidate cell; or
a channel state information reference signal (CSI-RS) of the candidate cell.

11. The method according to any one of claims 3 to 9, wherein
the first TCI set is a union of second TCI sets of respective candidate cells, and a second TCI set is a TCI set of a candidate cell; or
the first TCI set comprises at least one TCI identifier, and one TCI identifier corresponds to one TCI state in the second TCI set.

12. The method according to any one of claims 3 to 11, further comprising:
after determining that the terminal hands over to the target cell, keeping a fourth TCI state in an activated state, wherein the fourth TCI state comprises any one of:
the first TCI state;
a TCI state that is in an activated state and corresponds to the target cell in the first TCI set; or
a TCI state that is in an activated state in the first TCI set.

13. The method according to any one of claims 1 to 12, further comprising:
receiving sixth information sent by the second network device, wherein the sixth information indicates a fifth TCI state, and the fifth TCI state is a TCI state of the target cell.

14. The method according to claim 13, wherein the sixth information is used to indicate the terminal to activate the fifth TCI state and deactivate the second TCI state.

15. A method for beam indication, performed by a first network device, comprising:
sending first information to a terminal, wherein the first information is used for triggering the terminal to perform handover to a target cell, and the first network device is a network device corresponding to a current serving cell of the terminal.

16. The method according to claim 15, wherein the first information comprises a first identifier and/or a second identifier, the first identifier is a cell identifier of the target cell, and the second identifier is used to determine the first TCI state, the first TCI state indicates a first beam, and the first beam is a beam used by the terminal after handover to the target cell.

17. The method according to claim 16, further comprising:
sending second information to the terminal, wherein the second information comprises a first TCI set and parameters of candidate cells preconfigured by the first network device for the terminal, the first TCI set comprises TCI states corresponding to the candidate cells, and the candidate cells are cells configured by the first network device for the terminal to perform beam measurement.

18. The method according to claim 17, further comprising:
sending third information to the terminal, wherein the third information is used for the terminal to activate one or more TCI states corresponding to one or more candidate cells in the first TCI set.

19. The method according to claim 17 or 18, wherein the first TCI state is one of:
at least one TCI state corresponding to the target cell in the first TCI set; or
at least one TCI state that is in an activated state and corresponds to the target cell in the first TCI set.

20. The method according to any one of claims 17 to 19, wherein a second TCI state is used for the terminal to determine a second beam, the second beam is a beam used by the terminal after handover to the target cell, and the second TCI state is one of:
the first TCI state; or
at least one TCI state that is in an activated state and corresponds to the target cell in the first TCI set and is different from the first TCI state.

21. The method according to any one of claims 17 to 20, wherein the TCI state comprises a quasi co-location (QCL) source, and the QCL source comprises at least one of:
a synchronization signal block (SSB) of a candidate cell; or
a channel state information reference signal (CSI-RS) of the candidate cell.

22. The method according to any one of claims 17 to 20, wherein
the first TCI set is a union of second TCI sets of respective candidate cells, and a second TCI set is a TCI set of a candidate cell; or
the first TCI set comprises at least one TCI identifier, and one TCI identifier corresponds to one TCI state in the second TCI set.

23. The method according to any one of claims 15 to 22, wherein a manner in which the terminal performs handover to the target cell is a handover based on random access channel less (RACH-less).

24. A method for beam indication, performed by a second network device, comprising:
sending fourth information to a terminal, wherein the fourth information is used to determine that the terminal successfully hands over to a target cell, and the second network device is a network device corresponding to the target cell.

25. The method according to claim 24, wherein
the fourth information is a first scheduled new transmission of the terminal on the target cell; or
the fourth information is preset information, and the preset information is transmitted on a physical downlink shared channel (PDSCH) first scheduled in the target cell.

26. The method according to any one of claims 24 or 25, further comprising:
sending fifth information to the terminal, wherein the fifth information is used to indicate the terminal to deactivate a third TCI state, and the third TCI state is all or a part of TCI states in a first TCI set, the first TCI set comprises TCI states corresponding to candidate cells, and the candidate cells are cells configured by the first network device for the terminal to perform beam measurement.

27. The method according to claim 26, wherein the TCI state comprises a quasi co-location (QCL) source, and the QCL source comprises at least one of:
a synchronization signal block (SSB) of a candidate cell; or
a channel state information reference signal (CSI-RS) of the candidate cell.

28. The method according to claim 26, wherein
the first TCI set is a union of second TCI sets of respective candidate cells, and a second TCI set is a TCI set of a candidate cell; or
the first TCI set comprises at least one TCI identifier, and one TCI identifier corresponds to one TCI state in the second TCI set.

29. The method according to any one of claims 25 to 28, further comprising:
sending sixth information to the terminal, wherein the sixth information indicates a fifth TCI state, and the fifth TCI state is a TCI state of the target cell.

30. The method according to any one of claims 25 to 29, wherein the sixth information is used to indicate the terminal to activate a fifth TCI state and deactivate the second TCI state.

31. A terminal, comprising:
a transceiver module, configured to receive first information sent by a first network device, wherein the first information is used for triggering the terminal to perform handover to a target cell, and the first network device is a network device corresponding to a current serving cell of the terminal;
a processing module, configured to determine, based on the first information, a first transmission configuration indication (TCI) state, wherein the first TCI state indicates a first beam, and the first beam is a beam used by the terminal during a process of performing handover to the target cell; and determine a second TCI state, wherein the second TCI state indicates a second beam, the second beam is a beam used by the terminal after handover to the target cell, and the second TCI state is the same as or different from the first TCI state.

32. A first network device, comprising:
a transceiver module, configured to send first information to a terminal, wherein the first information is used for triggering the terminal to perform handover to a target cell, and the first network device is a network device corresponding to a current serving cell of the terminal.

33. A second network device, comprising:
a transceiver module, configured to send fourth information to a terminal, wherein the fourth information is used to determine that the terminal successfully hands over to a target cell, and the second network device is a network device corresponding to the target cell.

34. A communication device, comprising:
one or more processors;
wherein the communication device is configured to implement the method according to any one of claims 1 to 14, or to implement the method according to any one of claims 15 to 23, or to implement the method according to any one of claims 24 to 30.

35. A storage medium storing instructions, wherein the instructions, when executed on a communication device, cause the communication device to implement the method according to any one of claims 1 to 14, or to implement the method according to any one of claims 15 to 23, or to implement the method according to any one of claims 24 to 30.

36. A communication system, comprising a terminal, configured to implement the method according to any one of claims 1 to 14, a first network device, configured to implement the method according to any one of claims 15 to 23, and a second network device, configured to implement the method according to any one of claims 24 to 30.
